# EUROPEAN PATENT APPLICATION

(11) **EP 2 031 594 A2**
(43) Date of publication of application: **04.03.2009**
(21) Application number: 08252544.5
(22) Date of filing: 25.07.2008
(51) Int. Cl.: G11B 27/28, G11B 27/10, G06F 17/30, G06K 9/00, H04N 5/00

(54) **Information processing device and information processing method**

(30) Priority: 20.08.2007 JP 2007213219
(71) Applicant: Sony Corporation, Tokyo (JP)
(72) Inventor: Shirane, Keita, Tokyo (JP); Ogikubo, Junichi, Tokyo (JP); Kakita, Shinjiro, Tokyo (JP)
(74) Representative: Horner, David Richard

(57) **Abstract**

Disclosed herein is an information processing device including: a memory configured to store at least one change point interval of video data on a data-by-data basis; a calculator configured to calculate at least one change point interval from input video data; a detector configured to detect change point intervals that match each other, one of the detected change point intervals arising from storage in the memory, the other of the detected change point intervals arising from calculation by the calculator; and a determiner configured to compare change point intervals with each other that are each included in a predetermined range from a respective one of the change point intervals detected by the detector, to determine whether or not the input video data matches video data corresponding to a change point interval stored in the memory.

## Description

### BACKGROUND OF THE INVENTION

The present invention relates to information processing devices, and particularly to an information processing device and an information processing method that allow moving image retrieval.

In recent years, network techniques such as the Internet are being improved, so that high-speed communication of various pieces of information is becoming possible and the reliability of this communication is being enhanced. Furthermore, a moving image sharing system is becoming prevalent. In this system, moving images are uploaded to a moving image management server connected to the Internet, and the moving images can be viewed in such a manner as to be shared by plural personal computers connected to the Internet.

For example, the following online service is prevalent. Specifically, in the service, a personal computer in a user's home is connected to a moving image management server via the Internet, and a moving image is uploaded to the moving image management server from the personal computer in the user's home so that this moving image can be viewed from another personal computer.

In such a moving image sharing system, the uploaded moving image will be one created by the user itself in some cases, but will be one that violates other people's copyrights in other cases. If a moving image that violates other people's copyrights is thus uploaded, it is important to prevent people from viewing the moving image e.g. by banning the downloading of the moving image. For determinations as to whether or not the uploaded moving images violate other people's copyrights, usually the manager of the moving image management server directly views the respective uploaded moving images to thereby make the determinations. However, it is difficult for the manager to view all the moving images if the number of uploaded moving images is large.

To address this problem, e.g. an image retrieval device has been proposed. This device makes determinations as to the matching and similarity of images with respect to a specific image, to thereby retrieve the image that matches the specific image without completely decoding video content compression-coded in accordance with e.g. the JPEG2000 system (refer to e.g. Japanese Patent Laid-Open No. 2006-285615 (FIG. 1)).

This related-art technique can rapidly retrieve the image that matches the specific image.

However, the number of moving images that will be uploaded on a network is very large, and the number of moving images that possibly violate other people's copyrights is also very large. Therefore, in order to rapidly retrieve a moving image based on features and so on of a specific image, it is important to reduce the amount of information that should be stored on the retrieval-execution side and the processing amount relating to the retrieval, for the rapid moving image retrieval.

### SUMMARY OF THE INVENTION

According to an embodiment of the present invention, there is provided an information processing device including a memory configured to store at least one change point interval of video data on a data-by-data basis, a calculator configured to calculate at least one change point interval from input video data, and a detector configured to detect change point intervals that match each other. One of the detected change point intervals arises from storage in the memory, and the other of the detected change point intervals arises from calculation by the calculator. The information processing device further includes a determiner configured to compare change point intervals with each other that are each included in a predetermined range from a respective one of the change point intervals detected by the detector, to thereby determine whether or not the input video data matches video data corresponding to a change point interval stored in the memory.

According to another embodiment of the present invention, there is provided an information processing method including the steps of storing at least one change point interval of video data on a data-by-data basis, calculating at least one change point interval from input video data, and detecting change point intervals that match each other. One of the detected change point intervals arises from the storing, and the other of the detected change point intervals arises from the calculating. The information processing method further includes the step of comparing change point intervals with each other that are each included in a predetermined range from a respective one of the change point intervals detected in the detecting, to thereby determine whether or not the input video data matches video data corresponding to a change point interval stored in the storing.

These embodiments of the present invention can provide an excellent advantage of allowing rapid moving image retrieval.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
FIG. 1 is a block diagram showing a functional configuration example of an information processing device;
FIG. 2 is a block diagram showing a functional configuration example of a feature extractor;
FIGS. 3A and 3B are diagrams each showing one example of the color histogram of a luminance signal Y, a color difference signal (blue) Cb, and a color difference signal [0] (red) Cr, extracted on a frame-by-frame basis, and FIG. 3C is a diagram showing the area difference between the color histograms of FIGS. 3A and 3B;
FIG. 4 is a diagram conceptually showing an example in which images corresponding to the respective frames included in a moving image are arranged in a time-series manner;
FIG. 5 is a diagram schematically showing cut-change point interval lists stored in a database;
FIG. 6 is a diagram showing cut-change point interval lists;
FIG. 7 is a diagram schematically showing one example of a determination method for determining whether or not moving images match each other through comparison between the cut-change point interval lists;
FIG. 8 is a flowchart showing the procedure of processing for retrieval of the matching moving image by the information processing device;
FIG. 9 is a flowchart showing the procedure of matching determination processing in the processing for retrieval of the matching moving image by the information processing device;
FIGS. 10A and 10B are diagrams showing cut-change point interval lists;
FIG. 11 is a block diagram showing a configuration example of an information processing device;
FIG. 12 is a block diagram showing a functional configuration example of a feature extractor;
FIG. 13 is a diagram schematically showing feature lists stored in a database;
FIG. 14 is a diagram showing feature lists;
FIG. 15 is a diagram showing line graphs indicating the histogram differences between consecutive frames in the feature lists;
FIG. 16 is a diagram showing line graphs indicating the histogram differences between consecutive frames in the feature lists;
FIG. 17 is a flowchart showing the procedure of threshold change processing by the information processing device;
FIG. 18 is a diagram showing classification of moving images based on characteristics of the moving images;
FIG. 19 is a block diagram showing a functional configuration example of a feature extractor;
FIG. 20 is a diagram conceptually showing the respective frames that are included in a moving image and arranged in a time-series manner;
FIG. 21 is a block diagram showing a configuration example of an information processing device;
FIG. 22 is a block diagram showing a functional configuration example of a feature extractor;
FIG. 23 is a diagram schematically showing feature lists stored in a database;
FIG. 24 is a block diagram showing a configuration example of an information processing device;
FIG. 25 is a block diagram showing a functional configuration example of a feature extractor;
FIG. 26 is a block diagram showing a functional configuration example of a feature checker;
FIG. 27 is a diagram showing the outline of a method for the decision of the check method by a check method decider; and
FIG. 28 is a system configuration diagram showing an information processing system.

### DETAILED DESCRIPTION OF THE PREFERRED EMBODIMENTS

An embodiment of the present invention will be described in detail below with reference to the accompanying drawings.

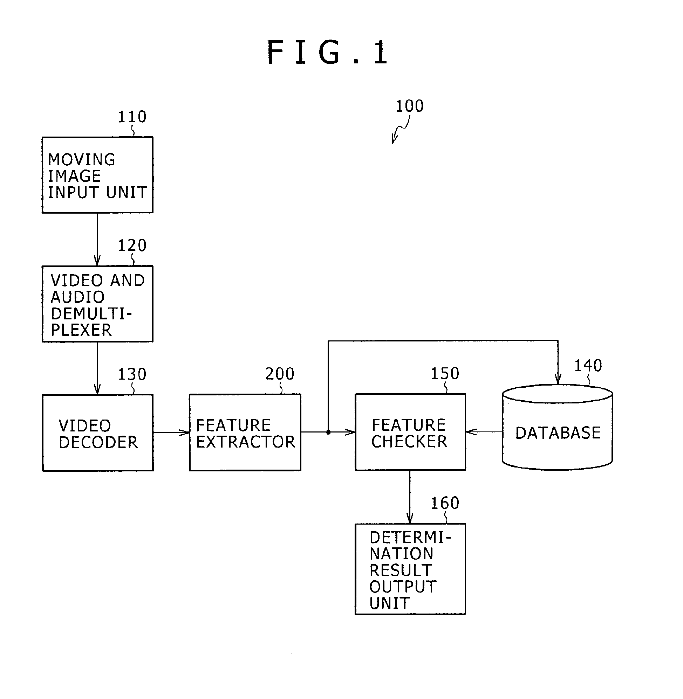

FIG. 1 is a block diagram showing a functional configuration example of an information processing device 100 according to an embodiment of the present invention. This information processing device 100 includes a moving image input unit 110, a video and audio demultiplexer 120, a video decoder 130, a database 140, a feature checker 150, a determination result output unit 160, and a feature extractor 200. This information processing device 100 can be realized by e.g. a personal computer that can extract a feature of a moving image captured by an imaging device such as a digital video camera through video analysis and can execute various kinds of image processing by using the extracted feature.

The moving image input unit 110 is a unit to which a moving image is input, and outputs the input moving image to the video and audio demultiplexer 120. Examples of the moving image that is to be input to the moving image input unit 110 include a moving image captured by an imaging device and a moving image received by television broadcasting.

The video and audio demultiplexer 120 separates the moving image output from the moving image input unit 110 into video data (signal) and audio data (signal), and outputs the separated video data to the video decoder 130. The separated audio data is not particularly utilized in one embodiment of the present invention.

The video decoder 130 creates baseband data by decoding the video data output from the video and audio demultiplexer 120, and outputs the created baseband data to the feature extractor 200.

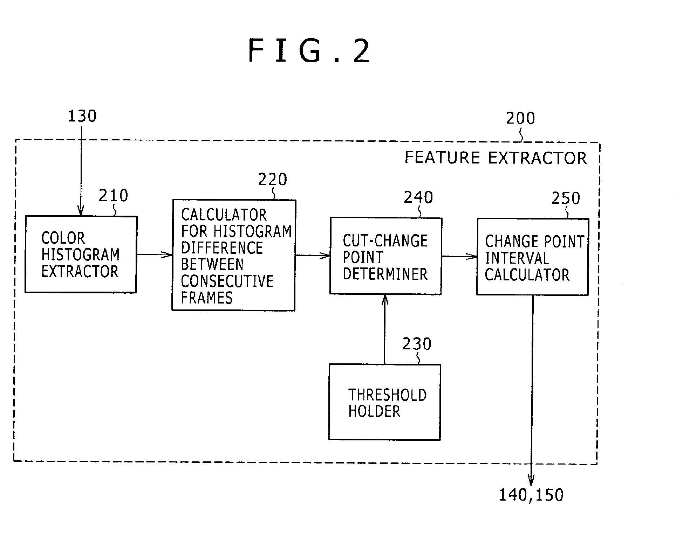

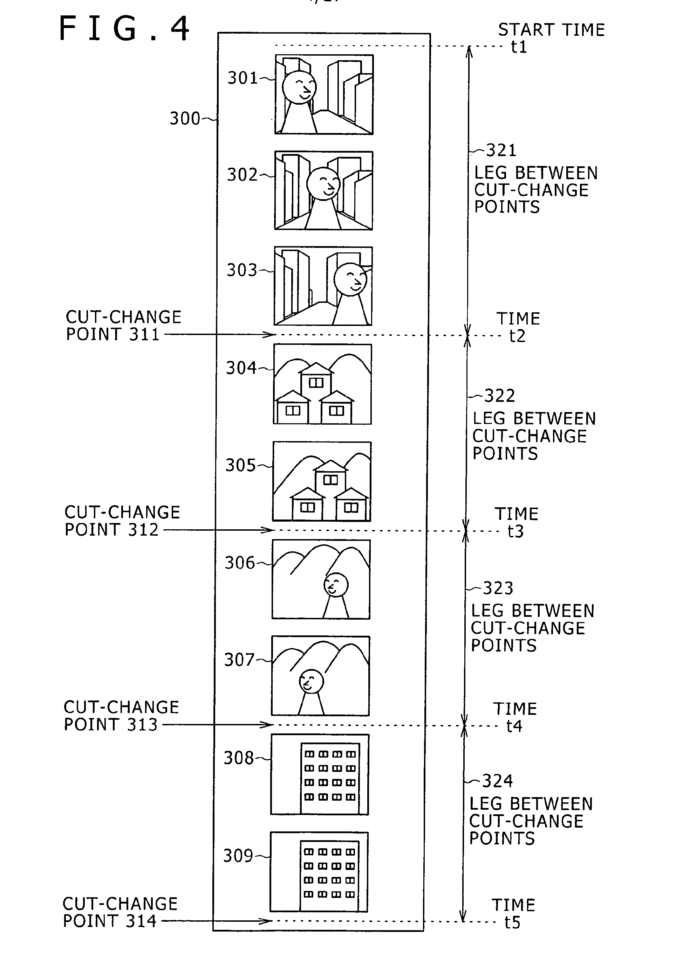

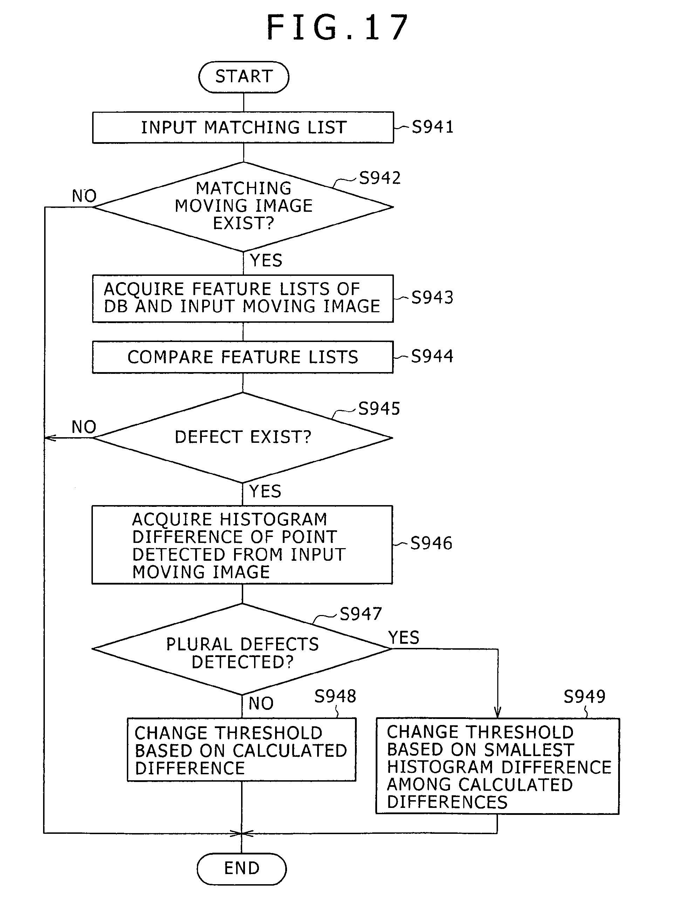

The feature extractor 200 extracts features based on the baseband data output from the video decoder 130, and outputs the extracted features to the database 140 and the feature checker 150. In one embodiment of the present invention, as the features extracted by the feature extractor 200, the interval between change points in a moving image, the histogram difference between frames included in the moving image, and a representative histogram as the histogram of at least one frame among frames included in the leg between change points are employed as an example. The change point encompasses e.g. a cut-change point that indicates the boundary of an instantaneous scene change of a moving image, and a cross fade point that indicates the boundary of a comparatively-large scene change of a moving image. The interval between change points indicates the time, the number of frames, or the like of the leg between consecutive change points. In this example, a cut-change point is employed as the change point. Details of other features will be described later with reference to FIG. 17 and so on. Details of the feature extractor 200 will be described later with reference to FIG. 2. Details of the interval between cut-change points will be described later with reference to FIG. 4.

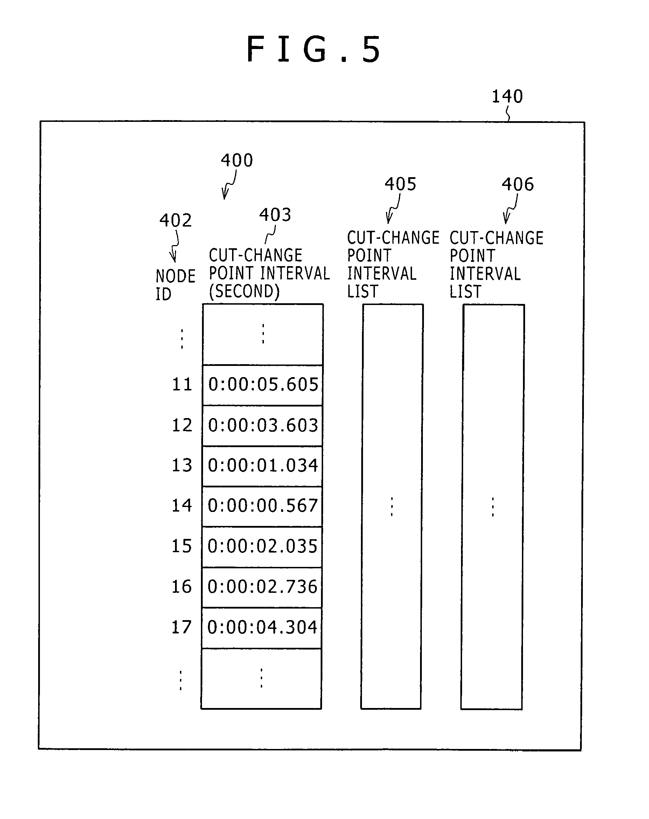

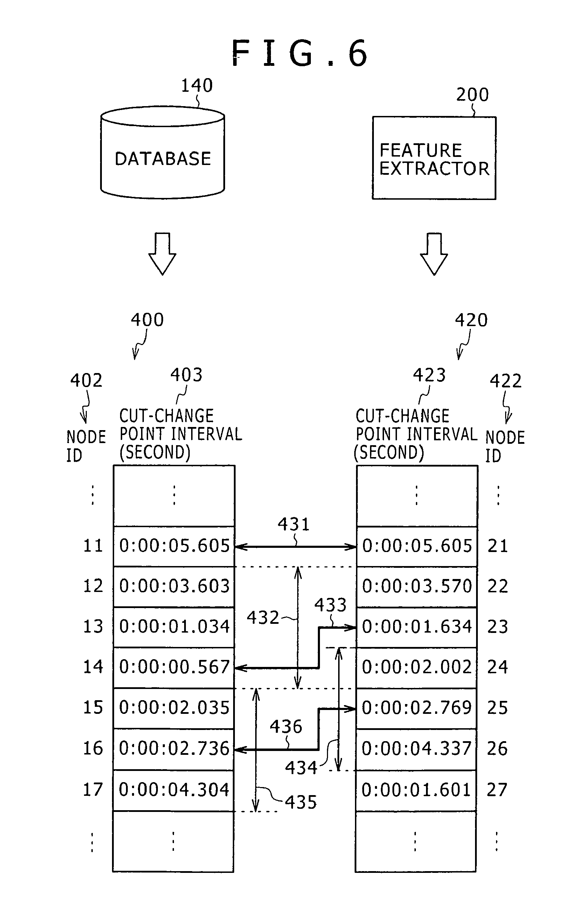

The change point intervals extracted by the feature extractor 200 are supplied to the database 140 and the feature checker 150 to be a cut-change point interval list in which the extracted change point intervals are arranged in a time-series manner. Details of the cut-change point interval list will be described later with reference to FIGS. 5, 6, and so on.

The database 140 stores the cut-change point interval list corresponding to the cut-change point intervals output from the feature extractor 200 for each moving image, and outputs the stored cut-change point interval list to the feature checker 150 for each moving image.

The feature checker 150 compares the cut-change point intervals output from the feature extractor 200 with the respective cut-change point interval lists stored in the database 140. Based on the comparison result, the feature checker 150 checks the moving image input to the moving image input unit 110 against the moving image corresponding to the cut-change point interval list stored in the database 140, to thereby determine whether or not both the moving images match each other. The feature checker 150 outputs a matching list that indicates this determination result to the determination result output unit 160. That is, the feature checker 150 retrieves the cut-change point interval list corresponding to the moving image that matches the moving image input to the moving image input unit 110, from the cut-change point interval lists stored in the database 140.

The determination result output unit 160 outputs the matching list output from the feature checker 150. For example, the determination result output unit 160 can display the matching list output from the feature checker 150.

FIG. 2 is a block diagram showing a functional configuration example of the feature extractor 200. The feature extractor 200 includes a color histogram extractor 210, a calculator 220 for the histogram difference between consecutive frames, a threshold holder 230, a cut-change point determiner 240, and a change point interval calculator 250.

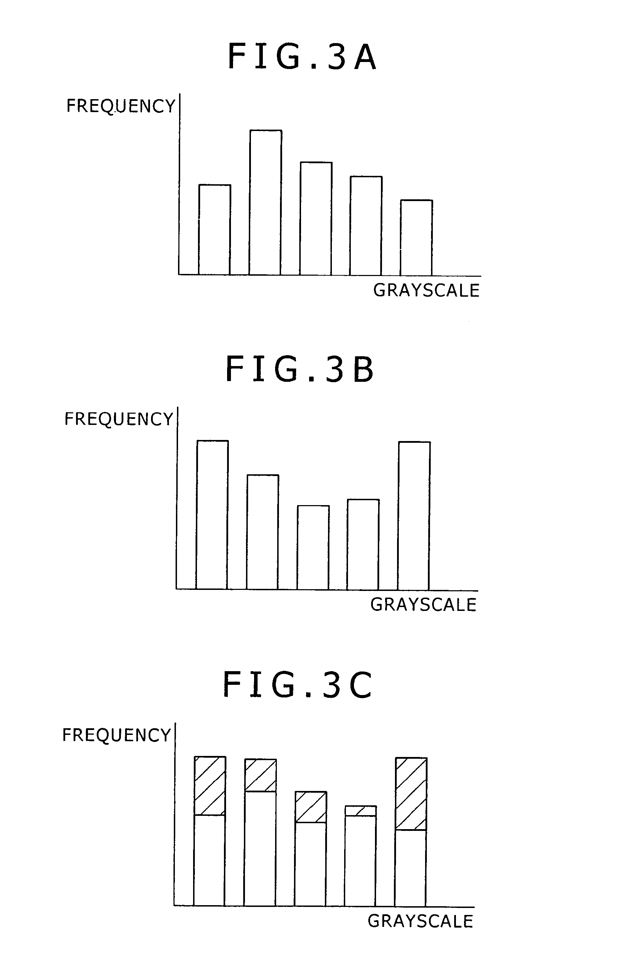

FIGS. 3A and 3B are diagrams showing one example of the color histogram of a luminance signal Y, a color difference signal (blue) Cb, and a color difference signal [0] (red) Cr extracted on a frame-by-frame basis from baseband data output from the video decoder 130. In the graphs of FIGS. 3A and 3B, the abscissa indicates the grayscale and the ordinate indicates the frequency. FIG. 3C is a diagram showing the area difference between the color histograms of FIGS. 3A and 3B. The hatched areas in FIG. 3C are equivalent to the area difference between the color histograms of FIGS. 3A and 3B. Details of FIGS. 3A to 3C will be described with reference to FIG. 2.

FIG. 4 is a diagram conceptually showing an example in which images corresponding to the respective frames included in a moving image are arranged in a time-series manner. Details of FIG. 4 will be described later with reference to FIG. 2.

The color histogram extractor 210 holds baseband data output from the video decoder 130 in a buffer and samples the color histogram of Y, Cb, and Cr of the entire screen from the baseband data held in the buffer. In addition, for the sampled color histogram, the color histogram extractor 210 separates the grayscales into N stages (e.g. N = 16) and carries out normalization in such a way that the sum of the frequencies of the respective stages becomes constant. Subsequently, the color histogram extractor 210 outputs the normalized histogram of Y, Cb, and Cr to the histogram difference calculator 220. For example, the histogram of Y, Cb, and Cr extracted from one frame included in a moving image is shown in FIG. 3A, and the histogram of Y, Cb, and Cr extracted from the frame subsequent to the frame corresponding to the histogram shown in FIG. 3A is shown in FIG. 3B. In this way, the histogram of Y, Cb, and Cr is extracted for each of the frames included in the moving image input to the moving image input unit 110.

The histogram difference calculator 220 calculates the differences in the color histogram area between consecutive two frames, for the color histograms of Y, Cb, and Cr of the respective frames output from the color histogram extractor 210. The calculator 220 outputs the calculated histogram differences to the cut-change point determiner 240. For example, as the area difference between the color histograms shown in FIGS. 3A and 3B corresponding to consecutive two frames, the area of the hatched areas shown in FIG. 3C is calculated.

The threshold holder 230 holds a threshold used when the cut-change point determiner 240 determines whether or not the boundary between consecutive two frames is a cut-change point, and outputs the held threshold to the cut-change point determiner 240.

The cut-change point determiner 240 determines whether or not the boundary between consecutive two frames is a cut-change point, based on whether or not the histogram difference output from the histogram difference calculator 220 surpasses the threshold held in the threshold holder 230. Specifically, if the histogram difference output from the calculator 220 surpasses the threshold held in the threshold holder 230, the cut-change point determiner 240 determines that the boundary between consecutive two frames corresponding to the histogram difference is a cut-change point, and outputs the time corresponding to this boundary as a cut-change point time to the change point interval calculator 250. On the other hand, if the histogram difference output from the calculator 220 does not surpass the threshold held in the threshold holder 230, the cut-change point determiner 240 determines that the boundary between consecutive two frames corresponding to the histogram difference is not a cut-change point. If it is determined that the boundary is not a cut-change point in this way, no time is output to the change point interval calculator 250.

FIG. 4 schematically shows images 301 to 309 corresponding to the respective frames included in a moving image 300 captured by an imaging device. The images 301 to 309 are included in one moving image 300. Four scenes whose imaging times and places are different from each other are included in the moving image 300, and therefore the composition, color, and so on of the subject instantaneously change across the frames corresponding to the scene changes. Consequently, the histogram differences between consecutive two frames corresponding to the scene changes are larger than the threshold held in the threshold holder 230, so that each of the boundaries between consecutive two frames is determined to be a cut-change point.

For example, the images 301 to 303 arise from imaging of a person walking around town. These images look similar to each other as a whole although the person moves across the images and thus the position of the person is somewhat different among the images. Therefore, the histogram differences between consecutive two frames of the images 301 to 303 do not surpass the threshold held in the threshold holder 230, so that it is determined that each boundary between consecutive two frames is not a cut-change point.

The images 304 and 305 arise from imaging of a row of houses in front of mountains. These images look similar to each other as a whole although they are captured in such a way that the imaging device is horizontally moved and thus the subject position horizontally moves so as to be somewhat different from each other between the images. However, the images 303 and 304 are different from each other as a whole because the boundary between these images corresponds to a switch of scenes whose imaging times and places are different from each other. Thus, the boundary between the images 303 and 304 is determined to be a cut-change point, and a time (the period from a start time t1) t2 corresponding to this cut-change point is output to the change point interval calculator 250.

Furthermore, the boundary between the images 305 and 306 and the boundary between the images 307 and 308 are also detected as cut-change points similarly, and times t3 and t4 corresponding to these cut-change points are output to the change point interval calculator 250.

The change point interval calculator 250 calculates the time interval between adjacent two cut-change points based on the times of the cut-change points output from the cut-change point determiner 240. The change point interval calculator 250 outputs the calculated cut-change point intervals to the database 140 and the feature checker 150. Specifically, if a cut-change point time is output from the cut-change point determiner 240, the change point interval calculator 250 calculates the difference between this time and the time output immediately before this time to thereby calculate the time internal between adjacent two cut-change points. As the interval between adjacent two cut-change points, the number of frames included in the leg between these cut-change points may be calculated and the calculated number of frames may be employed as the interval of the cut-change points.

Details of the cut-change point interval list, which is created based on cut-change point intervals extracted by the feature extractor 200, will be described below with reference to diagrams.

FIG. 5 is a diagram schematically showing cut-change point interval lists stored in the database 140. One or plural cut-change point interval lists are stored in the database 140. For example, cut-change point interval lists 400, 405, and 406 are stored in the database 140. The cut-change point interval lists stored in the database 140 may be created by sequentially storing cut-change point intervals output from the feature extractor 200, or alternatively may be created by sequentially storing cut-change point intervals extracted by another information processing device.

In the cut-change point interval list 400, cut-change point intervals 403 are recorded in a time-series manner. These intervals are associated with content ID for identification of the corresponding moving image. The content ID can be used for retrieval of a moving image stored in a moving image database provided inside or outside the information processing device 100. For example, "#123" is given as the content ID corresponding to the cut-change point interval list 400. Furthermore, in FIG. 5, node IDs 402 are given as identification numbers of the cut-change point intervals extracted from the corresponding moving image.

The cut-change point intervals 403 indicate the cut-change point intervals extracted from the corresponding moving image as times, and are recorded in a time-series manner.

In matching retrieval for a moving image input to the moving image input unit 110 by use of the database 140 in which one or plural cut-change point interval lists are thus stored, the cut-change point interval lists stored in the database 140 are sequentially read out one by one, and the following retrieval processing is executed.

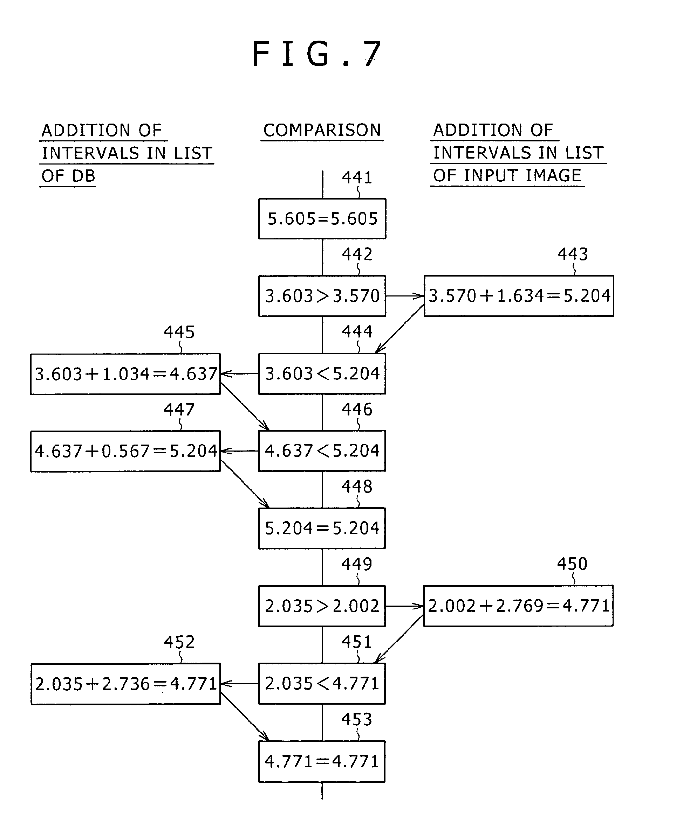

FIG. 6 is a diagram showing the cut-change point interval list 400 read out from the database 140 and a cut-change point interval list 420 corresponding to cut-change point intervals extracted from a moving image input through the moving image input unit 110 as the retrieval subject. With reference to FIG. 7, a description will be made below about how to make a determination as to whether or not the moving images corresponding to the cut-change point interval lists 400 and 420 match each other through comparison between these lists.

FIG. 7 is a diagram schematically showing one example of the method for making a determination as to whether or not the moving images corresponding to the cut-change point interval lists 400 and 420 match each other through comparison between these lists.

Initially, a cut-change point interval list as the comparison subject with respect to the cut-change point interval list 420 is read out from the database 140. For example, the cut-change point interval list 400 is read out. Subsequently, the values of the cut-change point intervals 403 in the cut-change point interval list 400 and the values of cut-change point intervals 423 in the cut-change point interval list 420 are sequentially compared with each other based on the order of the node IDs, so that the values matching each other are detected. For example, as indicated by an arrow 431, the value "0 : 00 : 05.605" of the cut-change point interval 403 corresponding to "11" of the node ID 402 in the cut-change point interval list 400 matches the value "0 : 00 : 05.605" of the cut-change point interval 423 corresponding to "21" of a node ID 422 in the cut-change point interval list 420 (441). In FIG. 7, the indication of former parts of the respective values of the cut-change point intervals shown in FIG. 6 is omitted.

If the values of the cut-change point intervals matching each other are thus detected from two cut-change point interval lists, the value of the cut-change point interval corresponding to the node ID subsequent to that of this matching value is read out from each of two lists. For example, the value "0 : 00 : 03.603" of the cut-change point interval 403 corresponding to "12" of the node ID 402 in the cut-change point interval list 400 and the value "0 : 00 : 03.570" of the cut-change point interval 423 corresponding to "22" of the node ID 422 in the cut-change point interval list 420 are read out. Subsequently, whether or not these read-out two values match each other is determined (442). If these values match each other, the value of the cut-change point interval corresponding to the node ID subsequent to that of this matching value is read out from each of two lists, and whether or not these read-out values match each other is determined.

On the other hand, as shown in FIGS. 6 and 7, if read-out two values do not match each other (442), from the cut-change point interval list from which the smaller value of these two values as the comparison subjects has been read out, the value of the cut-change point interval corresponding to the node ID subsequent to that of this smaller value is read out so as to be added to the comparison-subject smaller value. For example, the value "0 : 00 : 03.603" of the cut-change point interval 403 is compared with the value "0 : 00 : 03.570" of the cut-change point interval 423. The value "0 : 00 : 03.570" of the cut-change point interval 423 is smaller. Thus, the value "0 : 00 : 01.634" of the cut-change point interval 423 corresponding to "23" of the node ID 422 in the cut-change point interval list 420 is read out so as to be added to the value "0 : 00 : 03.570" of the cut-change point interval 423 (443).

Subsequently, whether or not the value arising from the addition matches the value to which addition is not applied is determined (444). If these values match each other, the value of the cut-change point interval corresponding to the node ID subsequent to that of this matching value is read out from each of two lists, and whether or not these read-out values match each other is determined. In this way, the values in a predetermined range from the first matching value are sequentially added, and whether or not values of two cut-change point interval lists match each other is determined. As the predetermined range, e.g. the range of three node IDs can be employed. For example, in a three-node-ID range 432 from the first matching values coupled to each other by the arrow 431 shown in FIG. 6, addition processing (443, 445, 447) is executed and comparison processing is executed (442, 444, 446, 448). As a result, in the three-node-ID range 432, two values as the comparison subjects match each other at the position indicated by an arrow 433 (448).

If values of two cut-change point interval lists match each other in the predetermined range from the first matching values in this manner, values in a predetermined range from these matching values are sequentially added similarly, and whether or not values of two cut-change point interval lists match each other is determined. As this predetermined range, e.g. the range corresponding to three node IDs may be employed similarly to the first range, or alternatively a different value may be employed.

For example, in a range 435 corresponding to three node IDs in the cut-change point interval list 400 and in a range 434 corresponding to three node IDs in the cut-change point interval list 420 from the matching values coupled to each other by the arrow 433 shown in FIG. 6, addition processing (450, 452) is executed and comparison processing is executed (449, 451, 453). As a result, in the three-node-ID ranges 434 and 435, two values as the comparison subjects match each other at the position indicated by an arrow 436 (453).

If at least one of two values read out on the basis of the first matching values or second or subsequent matching values matches the other comparison-subject value before this at least one value is subjected to addition processing, the next comparison processing is executed on the basis of these matching values without addition processing for this at least one value. If addition-result values do not match each other in the predetermined range, detection of matching values from two lists is repeated again.

The operation of the information processing device 100 according to one embodiment of the present invention will be described below with reference to diagrams.

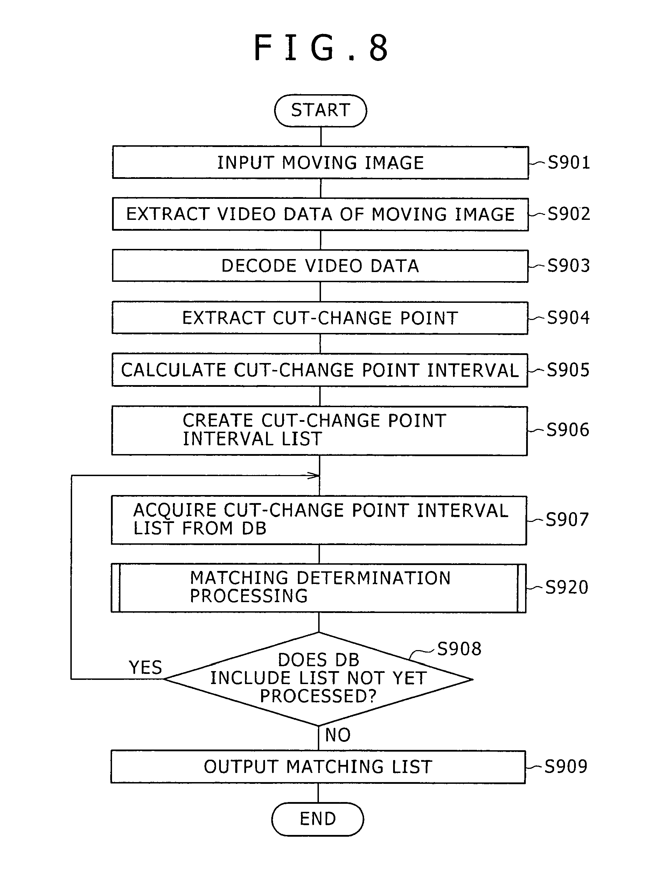

FIG. 8 is a flowchart showing the procedure of processing for retrieval of the matching moving image by the information processing device 100. FIG. 8 relates to an example in which one or plural cut-change point interval lists are stored in the database 140 and the cut-change point interval list corresponding to the moving image that matches the moving image input to the moving image input unit 110 is to be retrieved from the cut-change point interval lists stored in the database 140.

Initially, a moving image is input to the moving image input unit 110 (step S901). Subsequently, the video and audio demultiplexer 120 separates the input moving image into video data and audio data (step S902). Subsequently, the video decoder 130 decodes the video data separated from the input moving image to thereby create baseband data (step S903). Subsequently, the feature extractor 200 extracts cut-change points based on the created baseband data (step S904), and calculates the intervals between the extracted cut-change points (step S905).

Subsequently, based on the cut-change point intervals calculated by the feature extractor 200, the feature checker 150 creates a cut-change point interval list in which the cut-change point intervals are arranged in a time-series manner (step S906).

Subsequently, the feature checker 150 acquires one cut-change point interval list from the cut-change point interval lists stored in the database 140 (step S907). For example, as shown in FIG. 6, the cut-change point interval list 420 is created and the cut-change point interval list 400 is acquired from the database 140.

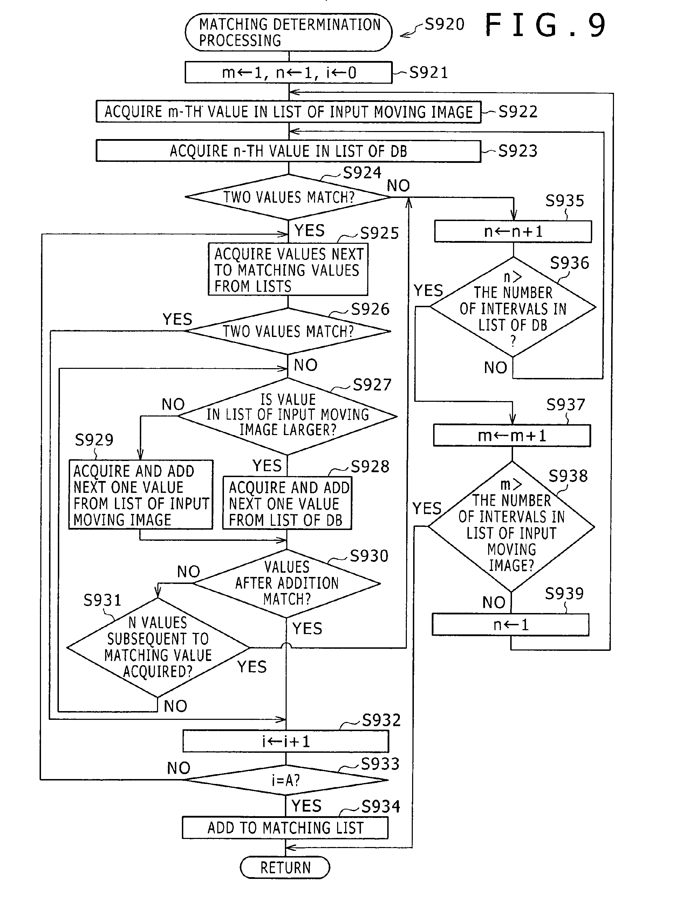

Subsequently, the feature checker 150 executes matching determination processing for the cut-change point interval list created in the step S906 and the cut-change point interval list acquired from the database 140 (step S920). Details of this matching determination processing will be described later with reference to FIG. 9.

Subsequently to the matching determination processing, it is determined whether or not a cut-change point interval list that has not yet been subjected to the matching determination processing exits among the cut-change point interval lists stored in the database 140 (step S908). If a cut-change point interval list that has not yet been subjected to the matching determination processing exits in the database 140 (step S908), the processing sequence returns to the step S907, where the feature checker 150 acquires a cut-change point interval list that has not yet been subjected to the matching determination processing among the cut-change point interval lists stored in the database 140.

If a cut-change point interval list that has not yet been subjected to the matching determination processing does not exist in the database 140 (step S908), the determination result output unit 160 outputs a matching list that indicates the determination result that is determined to match the comparison subject through the matching determination processing (step S909).

FIG. 9 is a flowchart showing the procedure of the matching determination processing (the processing procedure of the step S920 shown in FIG. 8) of the processing for retrieval of the matching moving image by the information processing device 100.

Initially, variables m and n are initialized to one and a variable i is initialized to zero (step S921). Subsequently, the value of the m-th cut-change point interval in the cut-change point interval list created in the step S906 is acquired (step S922). Subsequently, the value of the n-th cut-change point interval in the cut-change point interval list acquired from the database 140 is acquired (step S923).

Subsequently, the latest two values acquired in the steps S922 and S923 are compared with each other and whether or not these values match each other is determined (step S924). If the latest two values acquired in the steps S922 and S923 do not match each other (step S924), one is added to the variable n (step S935), and then it is determined whether or not the resultant variable n is larger than the number of cut-change point intervals stored in the cut-change point interval list acquired from the database 140 (step S936). If the variable n is not larger than the number of cut-change point intervals stored in the cut-change point interval list acquired from the database 140 (step S936), the processing sequence returns to the step S923, where the value of the n-th cut-change point interval in the cut-change point interval list acquired from the database 140 is acquired.

If the variable n is larger than the number of cut-change point intervals stored in the cut-change point interval list acquired from the database 140 (step S936), one is added to the variable m (step S937), and then it is determined whether or not the resultant variable m is larger than the number of cut-change point intervals stored in the cut-change point interval list created in the step S906 (step S938). If the variable m is not larger than the number of cut-change point intervals stored in the cut-change point interval list created in the step S906 (step S938), the variable n is initialized to one so that the first cut-change point interval can be acquired from the list from the database 140 (step S939), and the processing sequence returns to the step S922, where the value of the m-th cut-change point interval in the cut-change point interval list created in the step S906 is acquired. In this way, the respective values of the cut-change point intervals are sequentially acquired in a time-series manner so that the values of cut-change point intervals in two cut-change point interval lists can be compared with each other.

If the latest two values acquired in the steps S922 and S923 match each other (step S924), the values subsequent to these matching values acquired in the steps S922 and S923 are acquired from two cut-change point interval lists, respectively (step S925). For example, the value of the (m + 1)-th cut-change point interval is acquired from the cut-change point interval list created in the step S906, and the value of the (n + 1)-th cut-change point interval is acquired from the cut-change point interval list acquired from the database 140 (step S925).

Subsequently, whether or not two values acquired in the step S925 match each other is determined (step S926). If two values acquired in the step S925 match each other (step S926), the processing sequence proceeds to a step S932, where one is added to the variable i. If two values acquired in the step S925 do not match each other (step S926), it is determined whether or not, regarding two values as the comparison subjects, the value in the cut-change point interval list created in the step S906 is larger than the value in the cut-change point interval list acquired from the database 140 (step S927).

If the value in the cut-change point interval list created in the step S906 is larger than the value in the cut-change point interval list acquired from the database 140 (step S927), the subsequent value is acquired from the cut-change point interval list acquired from the database 140, and the acquired value is added to the value in the cut-change point interval list acquired from the database 140 (step S928). For example, if the value of the (n + 1)-th cut-change point interval in the cut-change point interval list acquired from the database 140 is the comparison subject in the step S926, the value of the (n + 2)-th cut-change point interval is acquired so as to be added to the value of the (n + 1)-th cut-change point interval. The resultant value is used as the next comparison subject.

On the other hand, if the value in the cut-change point interval list created in the step S906 is smaller than the value in the cut-change point interval list acquired from the database 140 (step S927), the subsequent value is acquired from the cut-change point interval list created in the step S906, and the acquired value is added to the value in the cut-change point interval list created in the step S906 (step S929). For example, if the sum of the values of the (m + 1)-th and (m + 2)-th cut-change point intervals in the cut-change point interval list created in the step S906 is the comparison subject in the step S927, the value of the (m + 3)-th cut-change point interval is acquired so as to be added to the sum of the values of the (m + 1)-th and (m + 2)-th cut-change point intervals. The resultant value is used as the next comparison subject.

Subsequently, it is determined whether or not two values, at least one of which arises from the addition processing in the step S928 or S929, match each other (step S930). If these two values match each other (step S930), the processing sequence proceeds to the step S932, where one is added to the variable i. If these two values do not match each other (step S930), the processing sequence proceeds to a step S931. In the step S931, two values determined to match each other in the step S924 or S926 are regarded as basis values, and it is determined whether or not a value acquired from either cut-change point interval list subsequently to two matching values is the N-th value from the value subsequent to the basis value. For example, if two values determined to match each other in the step S924 are employed as the basis values, it is determined whether or not the value of the (m + N)-th cut-change point interval is acquired from the cut-change point interval list created in the step S906, and it is determined whether or not the value of the (n + N)-th cut-change point interval is acquired from the cut-change point interval list acquired from the database 140.

If a value acquired from either cut-change point interval list subsequently to two values determined to match each other in the step S924 or S926 is the N-th value from the value subsequent to the basis value (step S931), the processing sequence returns to the step S935, where one is added to the variable n. On the other hand, if a value acquired from either cut-change point interval list subsequently to two values determined to match each other in the step S924 or S926 is not the N-th value from the value subsequent to the basis value (step S931), the processing sequence returns to the step S927. In the step S927, it is determined whether or not, regarding two values as the comparison subjects, the value arising from the cut-change point interval list created in the step S906 is larger than the value arising from the cut-change point interval list acquired from the database 140.

If one is added to the variable i (step S932), whether or not the variable i is equal to a constant A is determined (step S933). Specifically, it is determined whether or not the number of times of matching in the step S926 or S930 has reached A. If the variable i is equal to the constant A (step S933), the cut-change point interval list from which the determination-subject values are acquired is added to a matching list (step S934). As the constant A, e.g. two or three can be employed. As the constant N, e.g. any number of three to six can be employed. Specifically, the first matching values are employed as the first basis values, and the addition and comparison processing is executed in the ranges of N values from the values subsequent to the first basis values, to thereby determine whether or not values match each other. If values match each other in the ranges of N values, the latest acquired values are employed as the second basis values, and the addition and comparison processing is executed in the ranges of N values from the values subsequent to the second basis values, to thereby determine whether or not values match each other. This series of the addition and comparison processing is repeated. As a result, depending on whether or not the value matching is found A times, whether or not the input moving image matches the target moving image can be determined.

If the variable i is smaller than the constant A (step S933), the processing sequence returns to the step S925, where the values subsequent to the latest acquired values, which offered the matching in the step S926 or S930, are acquired from two cut-change point interval lists, respectively (step S925).

In the above-described example, if two values match each other in the step S924, the values subsequent to these matching values are sequentially acquired and compared. However, if two values match each other in the step S924 at the posterior end of at least one list, it is impossible to sequentially acquired and compare the values subsequent to the matching value at this end, because the comparison-subject cut-change point interval as the value subsequent to the matching value at this end does not exist. Therefore, it is important to execute the matching determination processing even in this case. For this purpose, e.g. the following scheme is available. Specifically, a cut-change point interval list is divided into the former part, the center part, and the latter part, and the way of the comparison and addition processing is changed depending on the position of the matching of two values in the step S924. More specifically, if two values match each other in the step S924 in the former part, the values subsequent to the matching values are sequentially acquired and compared as shown in FIGS. 7 and 9. If two values match each other in the step S924 in the latter part, the values previous to the matching values are sequentially acquired and compared. If two values match each other in the step S924 in the center part, the values along either one of the anterior and posterior directions from the matching values are sequentially acquired and compared. The above-described comparison and addition processing may be changed on the basis of either one of two lists as the comparison subjects. Alternatively, the comparison and addition processing may be changed depending on two positions of two values in two lists, determined to match each other in the step S924.

Next, a detailed description with reference to a diagram will be made below about the case in which short cut-change point intervals are consecutively extracted.

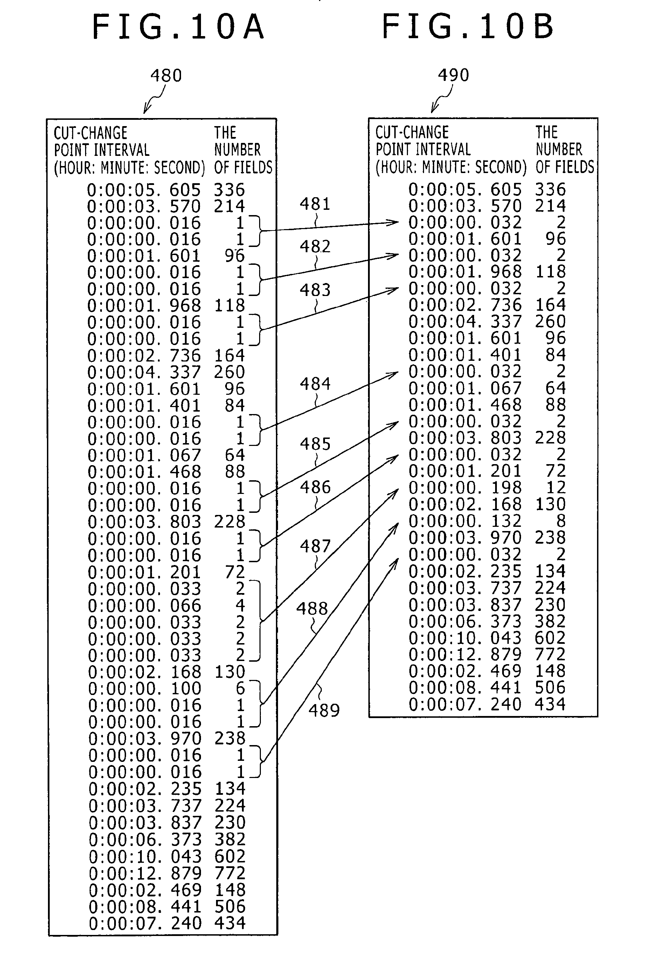

FIGS. 10A and 10B are diagrams showing cut-change point interval lists 480 and 490. FIG. 10A shows the cut-change point interval list 480 including consecutive comparatively-short cut-change point intervals. FIG. 10B shows the cut-change point interval list 490 resulting from the addition of the consecutive comparatively-short cut-change point intervals to each other.

As shown in FIG. 10A, it will be possible that comparatively-short cut-change point intervals that are each equivalent to one or two fields are extracted. If the matching determination processing is executed with use of such a cut-change point interval list including a large number of consecutive comparatively-short cut-change point intervals (e.g. one), there is a high possibility that, after matching of two values in the step S924, the subsequent values and the next-subsequent values match each other in the steps S925 and S926. This case will involve the possibility that the target moving image is determined to match an incorrect moving image that does not actually match the target moving image. To avoid this problem, if short cut-change point intervals are consecutively extracted, the change point interval calculator 250 adds these consecutive comparatively-short cut-change point intervals to each other as shown in FIG. 10B so that the resulting values may be used for the matching determination processing.

In the example of FIGS. 10A and 10B, consecutive short cut-change point intervals equal to or shorter than ten included in the cut-change point interval list 480 shown in FIG. 10A are added to each other, so that the cut-change point interval list 490 shown in FIG. 10B is obtained. Arrows 481 to 489 in FIGS. 10A and 10B indicate the relationship between cut-change point intervals before and after the addition.

As shown in FIG. 10A, the number of cut-change point intervals is 45 before the addition of the consecutive cut-change point intervals equal to or shorter than ten. In contrast, as shown in FIG. 10B, the number of cut-change point intervals is 32 after the addition of the consecutive cut-change point intervals equal to or shorter than ten. Thus, the amount of data stored in the database 140 can be reduced, and the possibility of mismatching with an incorrect moving image can be decreased. In the case of executing the addition processing shown in FIGS. 10A and 10B, this addition processing is executed for both the cut-change point interval lists stored in the database 140 and the cut-change point interval list corresponding to the moving image as the subject of the matching determination processing.

Next, a description will be made below about an example in which the threshold used by the feature extractor 200 is changed based on the determination result by the feature checker 150.

As described above, the matching determination processing by the feature checker 150 is greatly affected by the cut-change points extracted by the feature extractor 200. However, even if a moving image corresponding to a cut-change point interval list stored in the database 140 and the moving image input to the moving image input unit 110 are the same, it will be possible that a frame position in one moving image is extracted as a cut-change point but the same frame position in the other moving image is not extracted as a cut-change point, if these two moving images have different image qualities, image sizes, and so forth. In this manner, it will be possible that the same cut-change points are not extracted from the same moving image, if the image quality, image size, and so on are different. In this case, the accuracy of the matching determination processing by the feature checker 150 will be lowered. Therefore, in order to enhance the accuracy of the matching determination processing by the feature checker 150, it is important to enhance the accuracy of the extraction of cut-change points from a moving image.

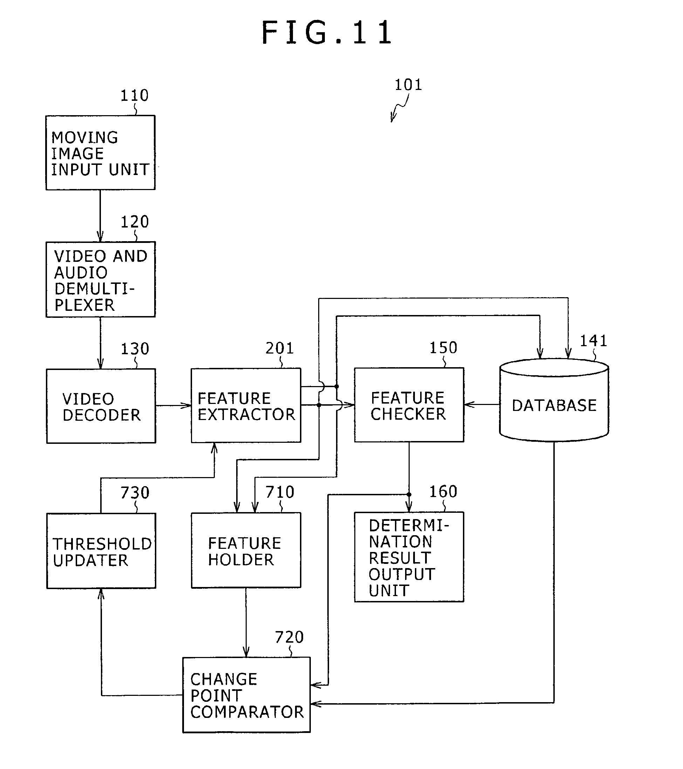

FIG. 11 is a block diagram showing a configuration example of an information processing device 101 obtained by partially modifying the information processing device 100 shown in FIG. 1. As the differences from the information processing device 100 shown in FIG. 1, the information processing device 101 includes a database 141 and a feature extractor 201 instead of the database 140 and the feature extractor 200, and further includes a feature holder 710, a change point comparator 720, and a threshold updater 730. The configuration except the database 141, the feature extractor 201, the feature holder 710, the change point comparator 720, and the threshold updater 730 is the same as that in the information processing device 100 shown in FIG. 1, and therefore the description of the configuration except these components is omitted. In matching determination processing, the feature checker 150 records the position of the first matching value in the matching determination processing in a matching list on a list-by-list basis.

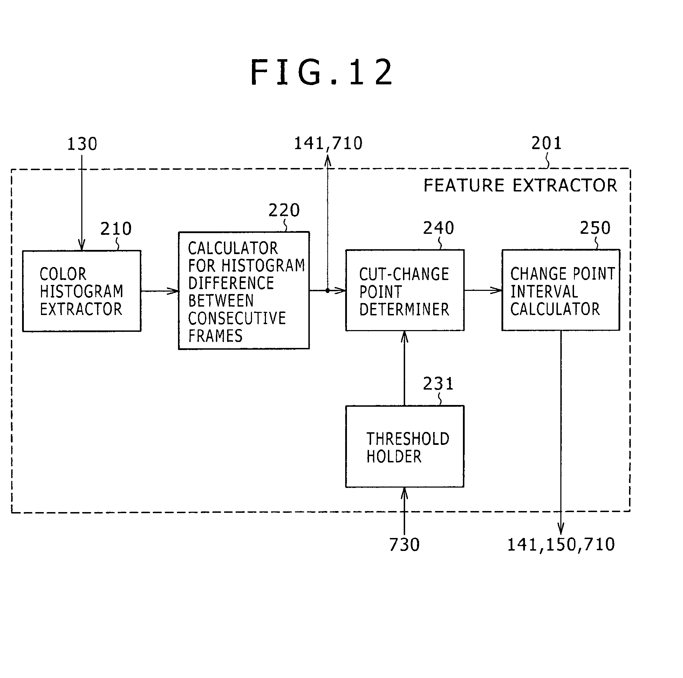

The feature extractor 201 extracts the histogram differences between consecutive frames included in a moving image and cut-change point intervals based on baseband data output from the video decoder 130. The feature extractor 201 outputs the extracted cut-change point intervals to the feature checker 150 and outputs the extracted histogram differences and cut-change point intervals to the database 141 and the feature holder 710. Details of the feature extractor 201 will be described later with reference to FIG. 12.

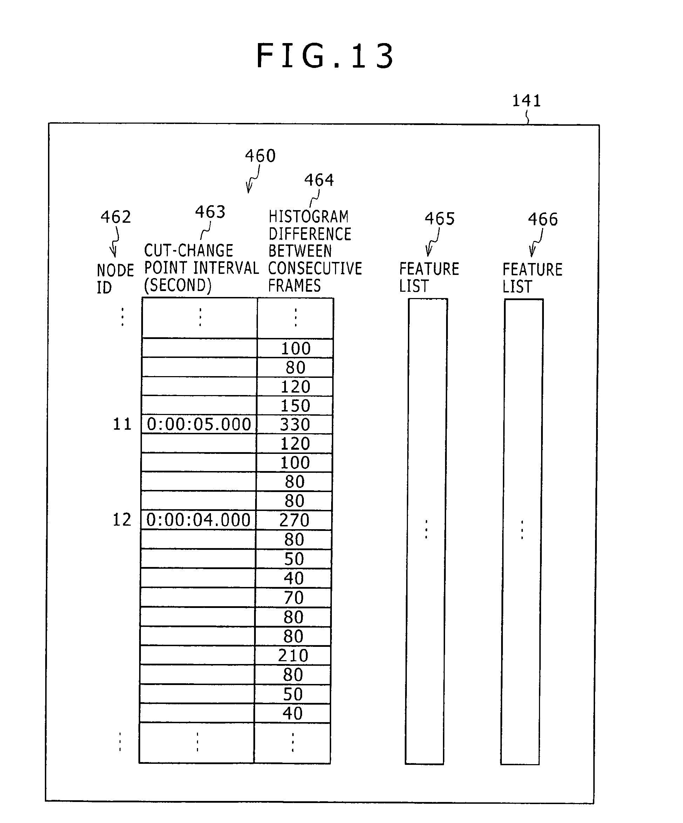

The database 141 stores a feature list corresponding to the histogram differences and cut-change point intervals output from the feature extractor 201 for each moving image, and outputs the stored feature list to the feature checker 150 for each moving image. Details of the feature list will be described later with reference to FIGS. 12, 13, and so on.

The feature checker 150 compares the cut-change point intervals output from the feature extractor 201 with the respective feature lists stored in the database 141. Based on the comparison result, the feature checker 150 determines whether or not the moving image input to the moving image input unit 110 matches the moving image corresponding to the feature list stored in the database 141. The feature checker 150 outputs a matching list that indicates this determination result to the determination result output unit 160. That is, the feature checker 150 retrieves the feature list corresponding to the moving image that matches the moving image input to the moving image input unit 110, from the feature lists stored in the database 141.

The feature holder 710 creates and holds the feature list in which histogram differences and cut-change point intervals are arranged in a time-series manner, based on the histogram differences and cut-change point intervals output from the feature extractor 201. The feature holder 710 outputs the held feature list to the change point comparator 720.

The change point comparator 720 acquires from the database 141 the feature list included in the matching list output from the feature checker 150. The change point comparator 720 detects change points that do not match each other from the acquired feature list and the feature list output from the feature holder 710, and compares the histogram differences of the detected change points with each other. Furthermore, the change point comparator 720 calculates a threshold based on the comparison result, and outputs the calculated threshold to the threshold updater 730.

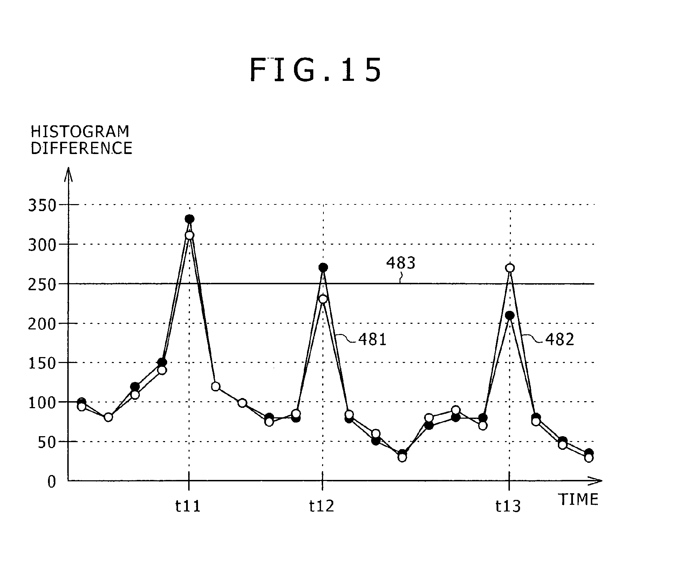

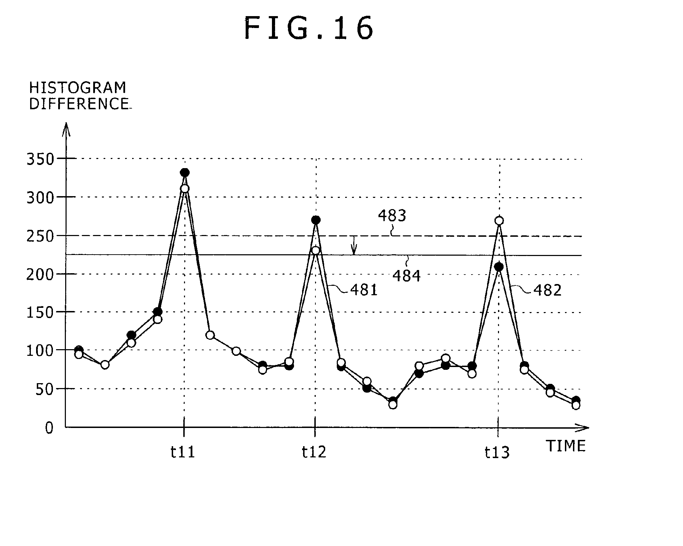

The threshold updater 730 updates the threshold used in the extraction of change points by the feature extractor 201, based on the threshold output from the change point comparator 720. Details of the threshold updating will be described later with reference to FIGS. 15, 16, and so on.

FIG. 12 is a block diagram showing a functional configuration example of the feature extractor 201. The feature extractor 201 is different from the feature extractor 200 shown in FIG. 2 in that the feature extractor 201 includes a threshold holder 231 instead of the threshold holder 230. Furthermore, the feature extractor 201 outputs histogram differences from the calculator 220 for the histogram difference between consecutive frames to the database 141 and the feature holder 710. In addition, the feature extractor 201 outputs cut-change point intervals from the change point interval calculator 250 to the database 141, the feature checker 150, and the feature holder 710. The configuration except the threshold holder 231 is the same as that in the feature extractor 200 shown in FIG. 2, and therefore the description of the configuration except the threshold holder 231 is omitted.

The threshold holder 231 holds the threshold used when the cut-change point determiner 240 determines whether or not the boundary between consecutive two frames is a cut-change point, and updates the held threshold based on update information from the threshold updater 730. The threshold holder 231 outputs the held threshold to the cut-change point determiner 240.

Details of the feature list, which is created based on histogram differences and cut-change point intervals output from the feature extractor 201, will be described below with reference to diagrams.

FIG. 13 is a diagram schematically showing feature lists stored in the database 141. One or plural feature lists are stored in the database 141. For example, feature lists 460, 465, and 466 are stored in the database 141. As the feature lists stored in the database 141, feature lists created based on the histogram differences and cut-change point intervals output from the feature extractor 201 may be sequentially stored. Alternatively, feature lists created by another information processing device may be stored.

In the feature list 460, cut-change point intervals 463 and histogram differences 464 between consecutive frames are recorded in association with each other in a time-series manner. These features are associated with content ID (e.g. "#223") for identification of the corresponding moving image. Furthermore, in FIG. 13, node IDs 462 are given as identification numbers of the cut-change point intervals extracted from the corresponding moving image. The cut-change point intervals 463 are similar to the cut-change point intervals 403 shown in FIG. 5, and therefore the description thereof is omitted.

The histogram differences 464 indicate the histogram differences output from the histogram difference calculator 220 in the feature extractor 201, and are recorded in a time-series manner on a frame-by-frame basis. The cut-change point intervals 463 are recorded for two consecutive frames corresponding to the histogram differences that surpass the threshold held in the threshold holder 231 among the histogram differences calculated by the histogram difference calculator 220. In contrast, as the histogram differences 464, all of the histogram differences calculated by the histogram difference calculator 220 are recorded.

As described above, the matching determination processing by the feature checker 150 is executed by using the cut-change point intervals 463 in the feature list 460. Therefore, the description of the matching determination processing by the feature checker 150 is omitted.

Next, a detailed description with reference to diagrams will be made below about a threshold change method for changing the threshold based on the histogram differences between consecutive frames, stored in feature lists.

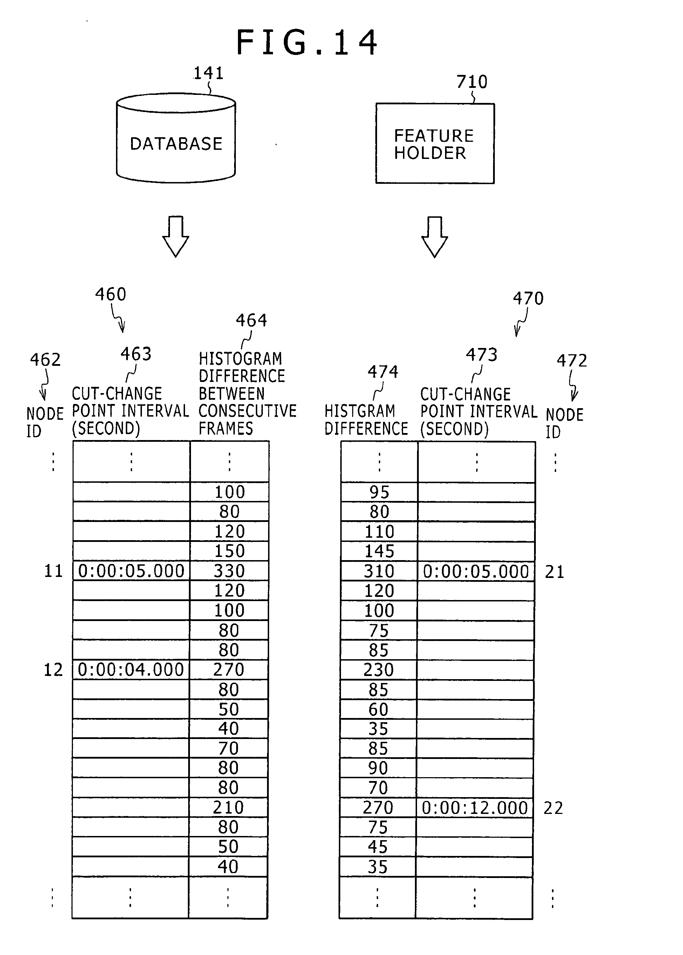

FIG. 14 is a diagram showing the feature list 460 acquired from the database 141 and a feature list 470 acquired from the feature holder 710. In the following, the change of a threshold through comparison of histogram differences between consecutive frames between the feature lists 460 and 470 will be described with reference to FIGS. 15 and 16.

FIGS. 15 and 16 each show line graphs indicating the histogram differences between consecutive frames in the feature lists 460 and 470. A line graph 481 indicates the histogram differences 464 between consecutive frames in the feature list 460. A line graph 482 indicates histogram differences 474 between consecutive frames in the feature list 470. In FIG. 15, 250 is set as a threshold 483. In FIG. 16, the threshold 483 of 250 is changed to a threshold 484 of 230. In this example, the moving image corresponding to the feature list 460 acquired from the database 141 is a moving image of high image quality. In contrast, the moving image corresponding to the feature list 470 acquired from the feature holder 710 is a moving image of low image quality. That is, two moving images as the comparison subjects are the same but have different image qualities.

As shown in FIG. 15, the histogram differences between consecutive frames in two lists greatly change at times t11, t12, and t13. In the case of FIG. 15, because the threshold 483 is set to 250, the boundaries between consecutive frames at the time t11 are extracted as cut-change points from both the high-quality moving image and low-quality moving image. In contrast, at the time t12, the frame boundary is extracted as a cut-change point from the high-quality image because the histogram difference across the boundary is larger than the threshold, whereas the frame boundary is not extracted as a cut-change point from the low-quality image because the histogram difference across the boundary is smaller than the threshold. At the time t13, the frame boundary is extracted as a cut-change point from the low-quality image because the histogram difference across the boundary is larger than the threshold, whereas the frame boundary is not extracted as a cut-change point from the high-quality image because the histogram difference across the boundary is smaller than the threshold. As above, it will be possible that the positions of the extracted cut-change points are different between two moving images identical to each other, if the image quality, image size, and so on are different therebetween.

The high-quality moving image will be close to the original video and have high accuracy of the cut-change point extraction. Therefore, when the positions of the extracted cut-change points are different between two moving images identical to each other, the threshold is changed with faith in the histogram differences of the moving image having high image quality. Specifically, if a point exists that has a histogram difference higher than the threshold in a high-quality image but has one equal to or lower than the threshold in a low-quality image, the threshold is so changed that this point will be extracted as a cut-change point also from the low-quality image. For example, the threshold is set to the histogram difference of such a point in the low-quality image. Specifically, for example, the threshold 483 set to 250 in FIG. 15 is changed as shown in FIG. 16 to the threshold 484 of 230, which is equivalent to the value at the time t12 in the line graph 482 corresponding to the low-quality image. Due to this operation, even when a moving image input after this change has low image quality, more appropriate cut-change points can be extracted therefrom.

At the time t13, only the histogram difference of the low-quality image is larger than the threshold. However, the accuracy of the cut-change point extraction from the low-quality image will be low. Therefore, the point whose histogram difference is lower than the threshold only in the low-quality image is regarded as an error, and the threshold change like that for the point at the time t12 is not carried out therefor. Furthermore, if there are plural points that each have a histogram difference larger than the threshold in a high-quality image but have one equal to or smaller than the threshold in a low-quality image, the smallest histogram difference among those of these points can be employed as the threshold.

FIG. 17 is a flowchart showing the procedure of the threshold change processing by the information processing device 101. FIG. 17 relates to an example in which a feature list corresponding to a moving image of high image quality is stored in the database 141 and a moving image input as the retrieval subject has low image quality.

Initially, a matching list created by the feature checker 150 is input to the change point comparator 720 (step S941). Subsequently, the change point comparator 720 determines whether or not the feature list determined to match the input moving image exists in the input matching list (step S942). If the feature list determined to match the input moving image does not exist, the operation of the threshold change processing is ended.

If the feature list determined to match the input moving image exists in the matching list (step S942), the change point comparator 720 acquires the feature list included in the matching list from the database 141, and acquires the feature list held in the feature holder 710 (step S943).

Subsequently, the change point comparator 720 compares the cut-change points in the feature list acquired from the database 141 with those in the feature list acquired from the feature holder 710, to thereby detect a point that is not included in the feature list acquired from the feature holder 710 (the feature list corresponding to the low-quality image) but included in the feature list acquired from the database 141 (the feature list corresponding to the high-quality image) (step S944). That is, a cut-change point defect in the feature list of the low-quality moving image is detected. If the point does not exist that is not included in the feature list of the low-quality image but included in the feature list of the high-quality image (step S945), the operation of the threshold change processing is ended.

If the point exists that is not included in the feature list of the low-quality image but included in the feature list of the high-quality image (step S945), the change point comparator 720 acquires the histogram difference of the point detected in the step S944, from the feature list acquired from the feature holder 710 (step S946). If plural points are detected in the step S944, the histogram differences of these plural points are acquired.

Subsequently, the change point comparator 720 determines whether or not plural points are detected in the step S944 (step S947). If only one point is detected in the step S944 (step S947), the change point comparator 720 sets the threshold to the histogram difference of this one point, acquired from the feature list obtained from the feature holder 710 (step S948).

If plural points are detected in the step S944 (step S947), the change point comparator 720 sets the threshold to the smallest histogram difference among the histogram differences of the plural points detected in the step S944, acquired from the feature list obtained from the feature holder 710 (step S949).

In the above-described example, a feature list corresponding to a moving image of high image quality is stored in the database 141 and a moving image input as the retrieval subject has low image quality. Alternatively, whether the moving images corresponding to two feature lists as the comparison subjects have high image quality or low image quality may be determined in advance before the matching determination processing by the feature checker 150, and the above-described threshold change processing may be executed based on the determination result. For this determination as to whether a moving image has high image quality or low image quality, e.g. the compression rate or the image size may be extracted from the header information of the compressed stream of the moving image so that the determination can be made based on the extracted compression rate or image size. Furthermore, before the retrieval of the matching moving image, plural moving images as test data may be input to the information processing device 101 and the threshold change processing may be executed by using the test data. Specifically, change points in the feature list corresponding to a high-quality moving image are compared with ones in the feature list corresponding to a low-quality moving image. If there is a point that is not determined to be a change point in the low-quality image but determined to be a change point in the high-quality image, the threshold is so adjusted that this point will be determined to be a change point also in the low-quality image. This can further enhance the accuracy of the matching determination processing by the feature checker 150. In addition, the relationship between the image quality of a moving image and the threshold may be obtained in advance by the above-described threshold change processing so that the threshold can be changed depending on the image quality of a moving image input as the retrieval target.

Next, a description will be made below about an example in which a position across which the color histogram changes through plural frames with a comparatively-large change amount is extracted as a change point for a moving image that includes no instantaneous increase in the change amount of the color histogram between consecutive frames.

As described above, the feature extractor 200 extracts a cut-change point corresponding to an instantaneous increase in the change amount of the color histogram between consecutive frames. However, if a position across which the color histogram changes through plural frames with a comparatively-large change amount can also be extracted as a change point, the retrieval accuracy will be further enhanced.

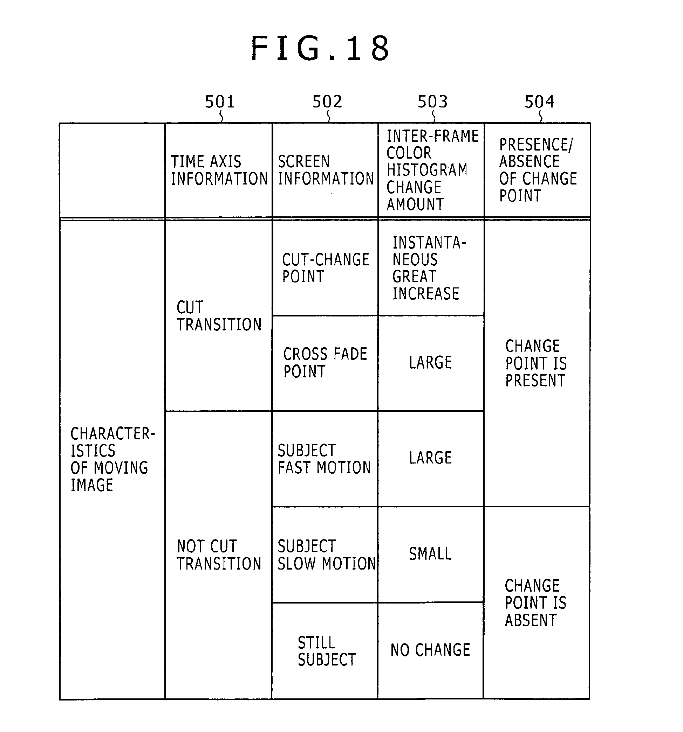

FIG. 18 is a diagram showing classification of moving images based on the characteristics of the moving images. In the example described below, a change point is extracted by using the amount of the color histogram change between frames included in a moving image as a characteristic of the moving image, and the moving image is classified depending on the presence or absence of the change point.

For example, the moving image can be classified based on whether or not a cut transition exits, as time axis information 501. The cut transition refers to e.g. the boundary of a scene change in the moving image. If a cut transition exits, as screen information 502, the cut transition can be classified into a cut-change point at which the scene is instantaneously switched between consecutive two frames and a cross fade point across which the scene is switched in a comparatively-short time over a predetermined number of frames. This classification can be made depending on whether an inter-frame color histogram change amount 503 becomes large instantaneously or becomes large not instantaneously but in a comparatively-short time.

If no cut transient exists, as the screen information 502, the moving image can be classified based on the motion of a subject in the screen (motion in the screen). The motion in the screen can be classified into e.g. "subject fast motion," "subject slow motion," and "still subject." This classification of the motion in the screen can be made by using the inter-frame color histogram change amount 503, similarly to the change point. Specifically, if the amount of the color histogram change through a predetermined number of frames is comparatively large, the motion in the screen is classified into "subject fast motion." If the amount of the color histogram change through a predetermined number of frames is comparatively small, the motion is classified into "subject slow motion." If the amount of the color histogram change through a predetermined number of frames is almost zero, the motion is classified into "still subject." If the amount of the color histogram change through a predetermined number of frames is comparatively large and thus the motion in the screen is classified into "subject fast motion," this moving image can be classified into an image including a change point similarly to a moving image including a cross fade point.

As shown in FIG. 18, a moving image including at least one of "cut-change point," "cross fade point," and "subject fast motion" is classified into a moving image including a change point. In contrast, a moving image that does not include any of "cut-change point," "cross fade point," and "subject fast motion" but includes "subject slow motion" or "still subject" can be classified into a moving image including no change point. A description will be made below about how to execute the processing for the retrieval of the matching moving image by using a change point encompassing "cross fade point" and "subject fast motion."

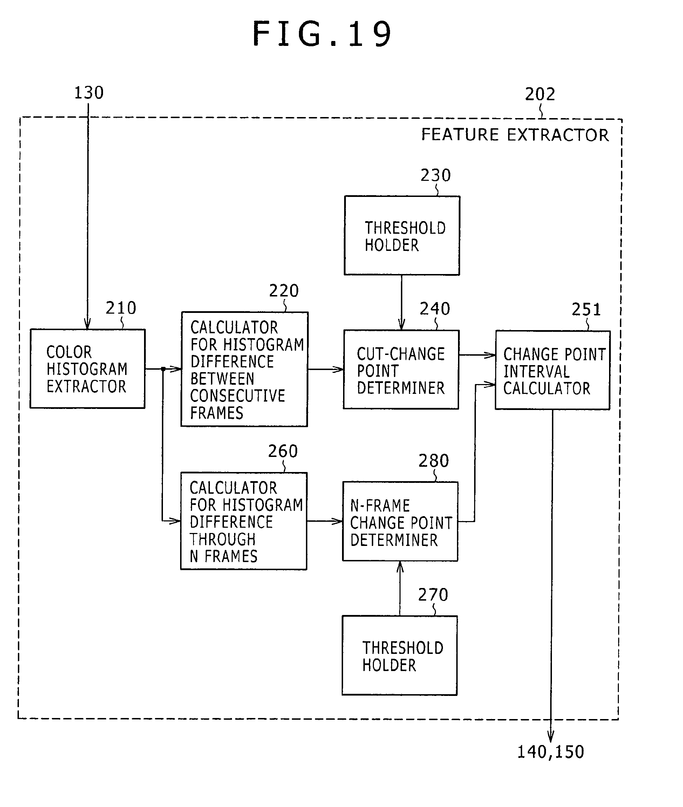

FIG. 19 is a block diagram showing a functional configuration example of a feature extractor 202. The feature extractor 202 is different from the feature extractor 200 shown in FIG. 2, in that the feature extractor 202 includes a change point interval calculator 251 instead of the change point interval calculator 250 and further includes a calculator 260 for the histogram difference through N frames, a threshold holder 270, and a determiner 280 for a change point among N frames (hereinafter, referred to as the N-frame change point determiner 280). The configuration except the change point interval calculator 251, the histogram difference calculator 260, the threshold holder 270, and the N-frame change point determiner 280 is the same as that in the feature extractor 200 shown in FIG. 2, and therefore the description of the configuration except these components is omitted.

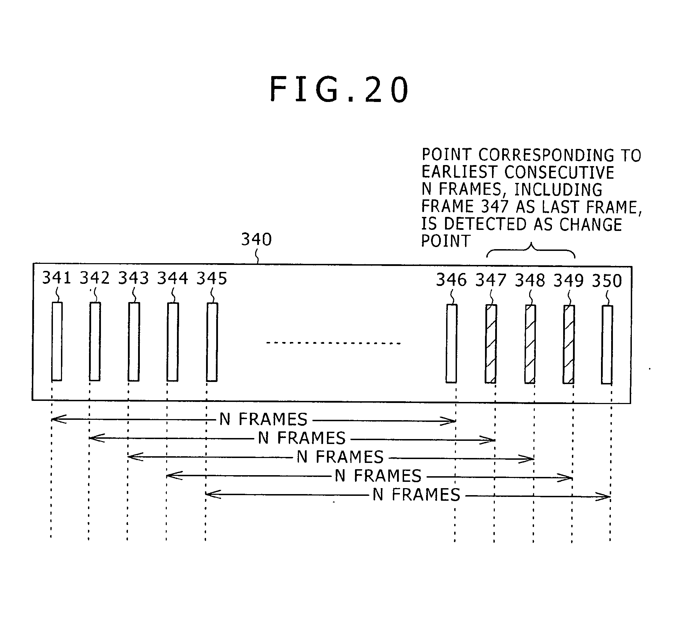

FIG. 20 is a diagram conceptually showing the respective frames that are included in a moving image and arranged in a time-series manner. Details of FIG. 20 will be described later with reference to FIG. 19.

The calculator 260 for the histogram difference through N frames calculates differences in the color histogram area between the first and last frames of consecutive N frames, for the color histograms of Y, Cb, and Cr of the respective frames output from the color histogram extractor 210. The calculator 260 outputs the calculated histogram differences to the N-frame change point determiner 280.

The threshold holder 270 holds a threshold used when the N-frame change point determiner 280 determines whether or not a point among consecutive N frames is a change point, and outputs the held threshold to the N-frame change point determiner 280.

The N-frame change point determiner 280 determines whether or not a point among consecutive N frames is a change point, based on whether or not the histogram difference output from the calculator 260 surpasses the threshold held in the threshold holder 270. Specifically, if the histogram difference output from the calculator 260 surpasses the threshold held in the threshold holder 270, the N-frame change point determiner 280 determines that the point among consecutive N frames corresponding to this histogram difference is a change point, and outputs the time corresponding to this point as a change point time to the change point interval calculator 251. On the other hand, if the histogram difference output from the calculator 260 does not surpass the threshold held in the threshold holder 270, the N-frame change point determiner 280 determines that the point among consecutive N frames corresponding to this histogram difference is not a change point. If it is determined that the point is not a change point in this way, no time is output to the change point interval calculator 251.

FIG. 20 schematically shows frames 341 to 350 of a moving image 340 captured by an imaging device. The frames 341 to 350 are included in one moving image 340. The frames 341 to 345 are consecutive frames, and the frames 346 to 350 are also consecutive frames. The pairs of the frames 341 and 346, 342 and 347, 343 and 348, 344 and 349, and 345 and 350 are each the pair of the first and last frames of consecutive N frames. For example, assuming that the frame rate is 30 fps (frames/second), N can be set to 30, which is equivalent to one second.

The example of FIG. 20 is based on an assumption that the histogram differences of the points between the frames 342 and 347, between the frames 343 and 348, and between the frames 344 and 349, respectively, surpass the threshold held in the threshold holder 270 and thus satisfy the condition for these points among consecutive N frames to be each determined as a change point. In FIG. 20, the last frame of the consecutive N frames among which a point is determined as a change point is indicated as the hatched area. If the points that satisfy the condition for the point to be determined as a change point are consecutive in this manner, of these consecutive points, only the point corresponding to the earliest consecutive N frames is detected as a change point by the N-frame change point determiner 280. Specifically, of the points between the frames 342 and 347, between the frames 343 and 348, and between the frames 344 and 349, respectively, satisfying the condition for the point to be determined as a change point, the point between the frames 342 and 347, which are the first and last frames of the earliest consecutive N frames that include the point satisfying the condition, is determined as a change point.

The change point interval calculator 251 calculates the time interval between adjacent two change points based on the times of the change points output from the cut-change point determiner 240 and the N-frame change point determiner 280 (hereinafter, the term "change point" encompasses both a cut-change point and a change point). The change point interval calculator 251 outputs the calculated change point intervals to the database 140 and the feature checker 150. Specifically, if a change point time is output from the cut-change point determiner 240 or the N-frame change point determiner 280, the change point interval calculator 251 calculates the difference between this time and the time output immediately before this time to thereby calculate the time internal between adjacent two change points. As the interval between adjacent two change points, the number of frames included in the leg between these change points may be calculated and the calculated number of frames may be employed as the interval of the change points.

Next, a description will be made below about an example in which the thresholds used by the cut-change point determiner 240 and the N-frame change point determiner 280 are changed based on the determination result by the feature checker 150. This example is a modification of the updating of the threshold in the threshold holder in the information processing device 101, shown in FIGS. 11 to 17. The part different from the configurations shown in FIGS. 11 to 17 will be described, and the description of the same part is omitted.

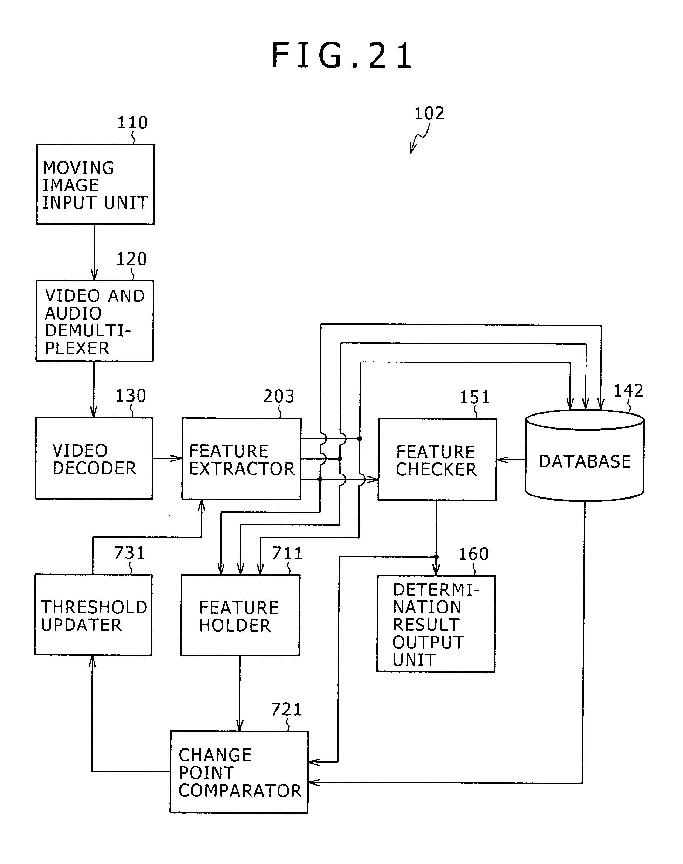

FIG. 21 is a block diagram showing a configuration example of an information processing device 102 obtained by partially modifying the information processing device 101 shown in FIG. 11. As the differences from the information processing device 101 shown in FIG. 11, the information processing device 102 includes a database 142, a feature checker 151, a feature extractor 203, a feature holder 711, a change point comparator 721, and a threshold updater 731 instead of the database 141, the feature checker 150, the feature extractor 201, the feature holder 710, the change point comparator 720, and the threshold updater 730. The configuration except these components is the same as that in the information processing device 101 shown in FIG. 11, and therefore the description of the configuration except these components is omitted.

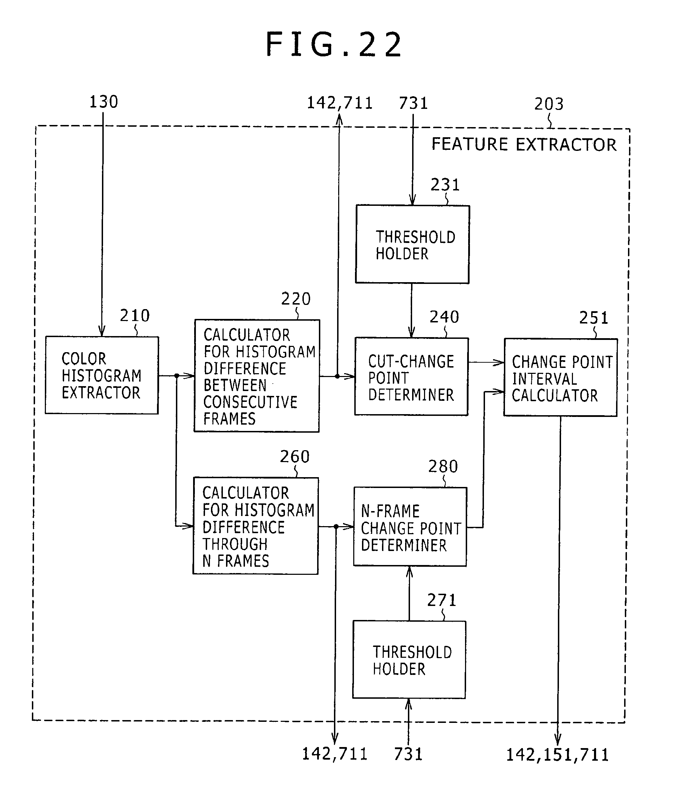

The feature extractor 203 extracts the histogram differences between consecutive two frames included in a moving image, cut-change point intervals, the histogram differences through consecutive N frames included in the moving image, and change point intervals, based on baseband data output from the video decoder 130. The feature extractor 203 outputs the extracted cut-change point intervals and change point intervals to the feature checker 151. Furthermore, the feature extractor 203 outputs the extracted histogram differences, cut-change point intervals, and change point intervals to the database 142 and the feature holder 711. Details of the feature extractor 203 will be described later with reference to FIG. 22.

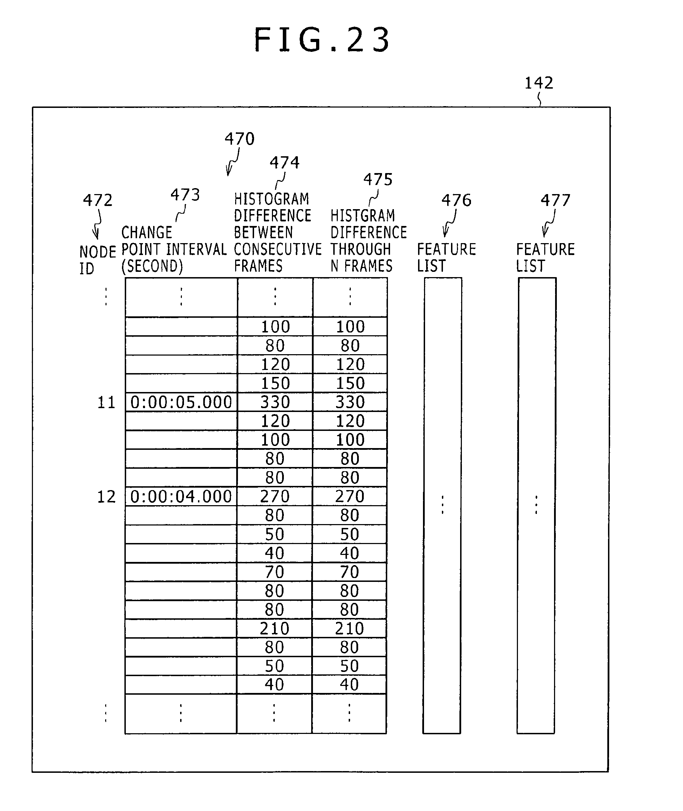

The database 142 stores a feature list corresponding to the respective histogram differences, cut-change point intervals, and change point intervals output from the feature extractor 203 for each moving image, and outputs the stored feature list to the feature checker 151 for each moving image. Details of the feature list will be described later with reference to FIG. 23 and so on.

The feature checker 151 compares the cut-change point intervals and change point intervals output from the feature extractor 203 with the respective feature lists stored in the database 142. Based on the comparison result, the feature checker 151 determines whether or not the moving image input to the moving image input unit 110 matches the moving image corresponding to the feature list stored in the database 142. The feature checker 151 outputs a matching list that indicates this determination result to the determination result output unit 160. That is, the feature checker 151 retrieves the feature list corresponding to the moving image that matches the moving image input to the moving image input unit 110, from the feature lists stored in the database 142.

The feature holder 711 creates and holds the feature list in which histogram differences, cut-change point intervals, and change point intervals are arranged in a time-series manner, based on the histogram differences, cut-change point intervals, and change point intervals output from the feature extractor 203. The feature holder 711 outputs the held feature list to the change point comparator 721.

The change point comparator 721 acquires from the database 142 the feature list included in the matching list output from the feature checker 151. The change point comparator 721 detects change points that do not match each other from the acquired feature list and the feature list output from the feature holder 711. Furthermore, for these detected change points, the change point comparator 721 compares the histogram differences between consecutive two frames with each other, and compares the histogram differences through consecutive N frames with each other. That is, the change point comparator 721 calculates the threshold used for the determination by the cut-change point determiner 240, based on the result of the comparison of the histogram differences between consecutive two frames, of the change points that are included in two feature lists and do not match each other. In addition, the change point comparator 721 calculates the threshold used for the determination by the N-frame change point determiner 280, based on the result of the comparison of the histogram differences through consecutive N frames, of the change points that are included in two feature lists and do not match each other. Subsequently, the change point comparator 721 outputs the respective calculated thresholds to the threshold updater 731.

The threshold updater 731 updates the threshold used in the extraction of cut-change points or change points by the feature extractor 203, based on the threshold output from the change point comparator 721. The same method as the update method described with reference to FIGS. 14, 15, and so on is used to update the threshold corresponding to the histogram differences between consecutive two frames and the threshold corresponding to the histogram differences through consecutive N frames.

FIG. 22 is a block diagram showing a functional configuration example of the feature extractor 203. The feature extractor 203 is different from the feature extractor 202 shown in FIG. 19 in that the feature extractor 203 includes the threshold holder 231 and a threshold holder 271 instead of the threshold holder 230 and the threshold holder 270. Furthermore, the feature extractor 203 outputs histogram differences from the calculator 220 for the histogram difference between consecutive frames and the calculator 260 for the histogram difference through N frames to the database 142 and the feature holder 711. In addition, the feature extractor 203 outputs change point intervals from the change point interval calculator 251 to the database 142, the feature checker 151, and the feature holder 711. The configuration except the threshold holders 231 and 271 is the same as that in the feature extractor 202 shown in FIG. 19, and therefore the description of the configuration except the threshold holders 231 and 271 is omitted.

The threshold holder 231 holds the threshold used when the cut-change point determiner 240 determines whether or not the boundary between consecutive two frames is a cut-change point, and updates the held threshold based on update information from the threshold updater 731. The threshold holder 231 outputs the held threshold to the cut-change point determiner 240.

The threshold holder 271 holds the threshold used when the N-frame change point determiner 280 determines whether or not a point among consecutive N frames is a change point, and updates the held threshold based on update information from the threshold updater 731. The threshold holder 271 outputs the held threshold to the N-frame change point determiner 280.

Details of the feature list, which is created based on histogram differences and change point intervals output from the feature extractor 203, will be described below with reference to diagrams.

FIG. 23 is a diagram schematically showing feature lists stored in the database 142. One or plural feature lists are stored in the database 142. For example, feature lists 470, 476, and 477 are stored in the database 142. As the feature lists stored in the database 142, feature lists created based on the histogram differences and change point intervals output from the feature extractor 203 may be sequentially stored. Alternatively, feature lists created by another information processing device may be stored.

In the feature list 470, change point intervals 473, histogram differences 474 between consecutive frames, and histogram differences 475 through N frames are recorded in association with each other in a time-series manner. These features are associated with content ID (e.g. "#323") for identification of the corresponding moving image. Furthermore, in FIG. 23, node IDs 472 are given as identification numbers of the change point intervals extracted from the corresponding moving image. The change point intervals 473 and the histogram differences 474 between consecutive frames are similar to the cut-change point intervals 463 and the histogram differences 464 between consecutive frames shown in FIG. 13, and therefore the description thereof is omitted.

The histogram differences 475 through N frames indicate the histogram differences output from the histogram difference calculator 260 in the feature extractor 203, and are recorded in a time-series manner on a frame-by-frame basis. The change point intervals 473 are recorded for the points between frames, corresponding to the histogram differences that surpass the threshold held in the corresponding threshold holder 231 or 271 among the histogram differences calculated by the histogram difference calculators 220 and 260. In contrast, as the histogram differences 475 through N frames, all of the histogram differences calculated by the histogram difference calculator 260 are recorded.

The updating of the threshold used for the determination by the N-frame change point determiner 280 is carried out by using the histogram differences 475 through N frames similarly to the update method described with reference to FIGS. 15, 16, and so on.

Next, a detailed description will be made below about how to retrieve the matching moving image for a moving image from which no change point interval can be extracted.

As shown in FIG. 18, moving images can be classified into ones including a change point and ones including no change point. In the above-described processing for the retrieval of the matching moving image, a change point interval is used, and therefore the comparison-subject moving image should include at least two change points. However, it will also be possible that e.g. a moving image obtained by capturing a scene in which the motion of a subject is slow does not include a change point as shown in FIG. 18. For such a case, the matching determination processing is changed depending on the presence or absence of a change point interval. Specifically, for a moving image from which no change point interval can be extracted, the retrieval of the matching moving image is carried out by using a feature other than the change point interval.

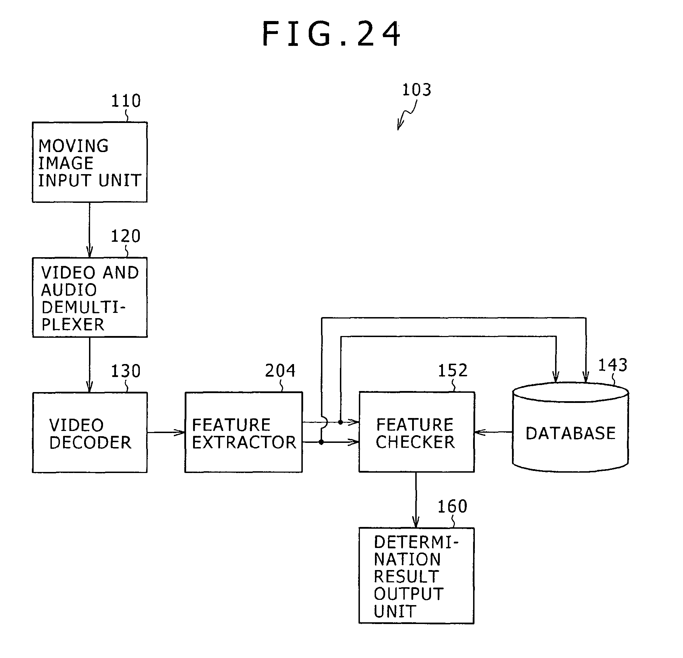

FIG. 24 is a block diagram showing a configuration example of an information processing device 103 obtained by partially modifying the information processing device 101 shown in FIG. 1. As the differences from the information processing device 100 shown in FIG. 1, the information processing device 103 includes a database 143, a feature checker 152, and a feature extractor 204 instead of the database 140, the feature checker 150, and the feature extractor 200. The configuration except the database 143, the feature checker 152, and the feature holder 204 is the same as that in the information processing device 100 shown in FIG. 1, and therefore the description of the configuration except these components is omitted.

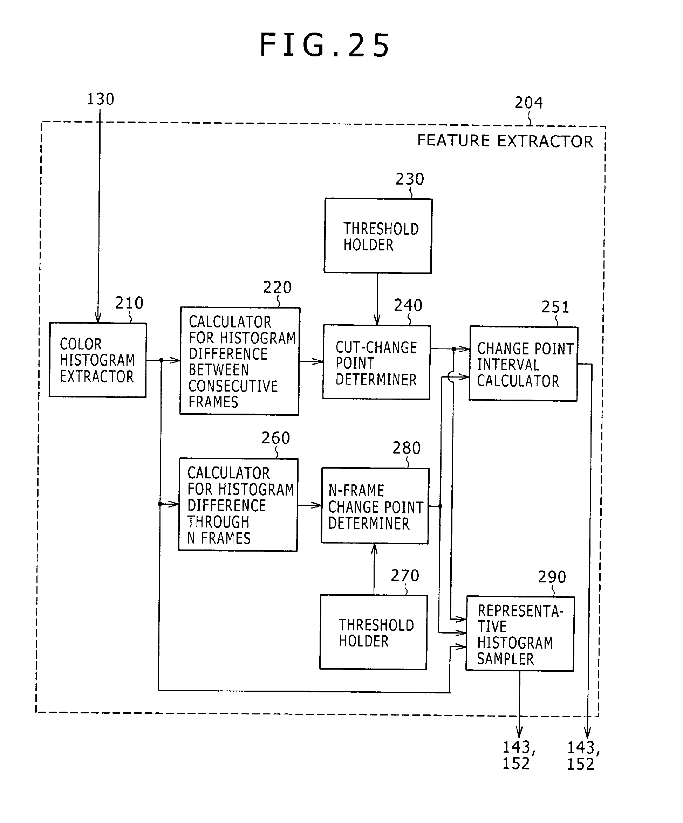

The feature extractor 204 extracts change point intervals and representative histograms between change points based on baseband data output from the video decoder 130, and outputs the extracted change point intervals and representative histograms to the database 143 and the feature checker 152. Details of the feature extractor 204 will be described later with reference to FIG. 25.

The database 143 stores a feature list corresponding to the change point intervals and representative histograms output from the feature extractor 204 for each moving image, and outputs the stored feature list to the feature checker 152 for each moving image.

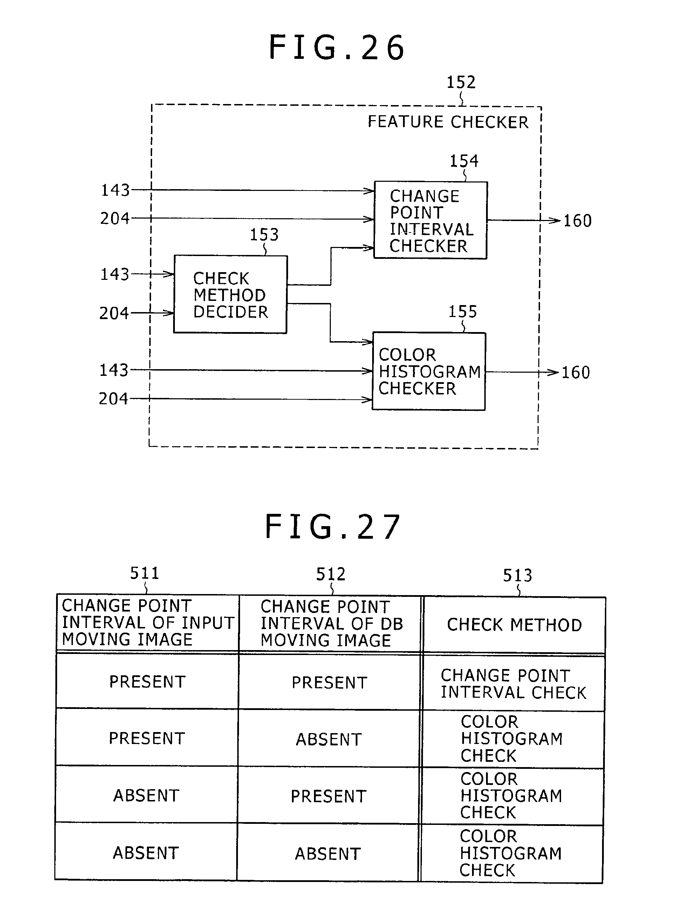

The feature checker 152 compares the change point intervals and representative histograms output from the feature extractor 204 with the respective feature lists stored in the database 143. Based on the comparison result, the feature checker 152 determines whether or not the moving image input to the moving image input unit 110 matches the moving image corresponding to the feature list stored in the database 143. The feature checker 152 outputs a matching list that indicates this determination result to the determination result output unit 160. That is, the feature checker 152 retrieves the feature list corresponding to the moving image that matches the moving image input to the moving image input unit 110, from the feature lists stored in the database 143. Details of the feature checker 152 will be described later with reference to FIG. 26.

FIG. 25 is a block diagram showing a functional configuration example of the feature extractor 204. The feature extractor 204 is different from the feature extractor 202 shown in FIG. 19 in that it further includes a representative histogram sampler 290. The configuration except the representative histogram sampler 290 is the same as that in the feature extractor 202 shown in FIG. 19, and therefore the description of the configuration except the representative histogram sampler 290 is omitted.

The representative histogram sampler 290 samples at least one frame from frames between adjacent two change points based on change point times output from the cut-change point determiner 240 and the N-frame change point determiner 280. The representative histogram sampler 290 selects a histogram output from the color histogram extractor 210 in association with the sampled frame, and outputs the selected histogram as the representative histogram to the database 143 and the feature checker 152. That is, the representative histogram sampler 290 samples the representative histogram in one cut. If no change point time is output by the cut-change point determiner 240 and the N-frame change point determiner 280 from one moving image input to the moving image input unit 110, the representative histogram sampler 290 samples at least one frame from the frames included in this input one moving image, and outputs a histogram output from the color histogram extractor 210 as the representative histogram in association with this selected frame.

FIG. 26 is a block diagram showing a functional configuration example of the feature checker 152. The feature checker 152 includes a check method decider 153, a change point interval checker 154, and a color histogram checker 155.

FIG. 27 is a diagram showing the outline of the method for the decision of the check method by the check method decider 153. In one embodiment of the present invention, the check method is decided based on whether or not a change point interval exists in the feature list corresponding to the change point intervals and representative histograms output from the feature extractor 204 and in the respective feature lists stored in the database 143. Specifically, as shown in FIG. 27, the check method by use of change point intervals is decided if a change point interval exists in the feature list corresponding to the change point intervals and representative histograms output from the feature extractor 204 (a change point interval 511 of an input moving image is "present") and a change point interval exists in the feature lists stored in the database 143 (a change point interval 512 of a DB moving image is "present"). On the other hand, the check method by use of color histograms is decided if a change point interval does not exist in the feature list corresponding to the change point intervals and representative histograms output from the feature extractor 204 (the change point interval 511 of an input moving image is "absent") and a change point interval does not exist in the feature lists stored in the database 143 (the change point interval 512 of a DB moving image is "absent").

Based on the feature list corresponding to the change point intervals and representative histograms output from the feature extractor 204 and the respective feature lists stored in the database 143, the check method decider 153 decides the check method depending on whether or not a change point interval is included in these lists as shown in FIG. 27. Corresponding to the decided check method, the check method decider 153 outputs a check instruction signal to the change point interval checker 154 or the color histogram checker 155. Specifically, if the check method by use of change point intervals is decided, the check method decider 153 outputs the check instruction signal to the change point interval checker 154. If the check method by use of color histograms is decided, the check method decider 153 outputs the check instruction signal to the color histogram checker 155.

Upon receiving the check instruction signal from the check method decider 153, the change point interval checker 154 compares the change point intervals output from the feature extractor 204 with the change point intervals included in the feature lists stored in the database 143. Based on the comparison result, the change point interval checker 154 determines whether or not the moving image input to the moving image input unit 110 matches the moving image corresponding to the feature list stored in the database 143. The change point interval checker 154 outputs a matching list that indicates this determination result to the determination result output unit 160. That is, similarly to the above-described feature checker 150, the change point interval checker 154 retrieves the feature list corresponding to the moving image that matches the moving image input to the moving image input unit 110, from the feature lists stored in the database 143.

Upon receiving the check instruction signal from the check method decider 153, the color histogram checker 155 compares the representative histograms output from the feature extractor 204 with the representative histograms included in the feature lists stored in the database 143. Based on the comparison result, the color histogram checker 155 determines whether or not the moving image input to the moving image input unit 110 matches the moving image corresponding to the feature list stored in the database 143. The color histogram checker 155 outputs a matching list that indicates this determination result to the determination result output unit 160. Specifically, upon receiving the check instruction signal from the check method decider 153, the color histogram checker 155 compares the representative histograms included in the feature list corresponding to the change point intervals and representative histograms output from the feature extractor 204 with the representative histograms included in the feature lists stored in the database 143, to thereby calculate the histogram differences between respective two of the representative histograms. If these calculated histogram differences are equal to or smaller than a threshold, the color histogram checker 155 determines that the moving image input to the moving image input unit 110 matches the moving image corresponding to the feature list stored in the database 143.

In this manner, the retrieval of the matching moving image can be carried out for both a moving image from which a change point is extracted and a moving image from which no change point is extracted.

For example, edited moving image content, such as a movie and TV program, will include change points. In this case, the matching moving image can be rapidly retrieved by using change point intervals. In addition, the color histogram check, in which the representative histograms of an input moving image are checked against representative histograms stored in the database, allows not only the retrieval of the matching moving image but also the retrieval of a similar moving image. In the case of moving image content including no change point, the number of frames from which the color histogram should be sampled is small because this content has a small change amount of the color histogram or no color histogram change. This allows a reduced information amount.

An information processing system including the information processing device according to one embodiment of the present invention will be described in detail below with reference to a diagram.

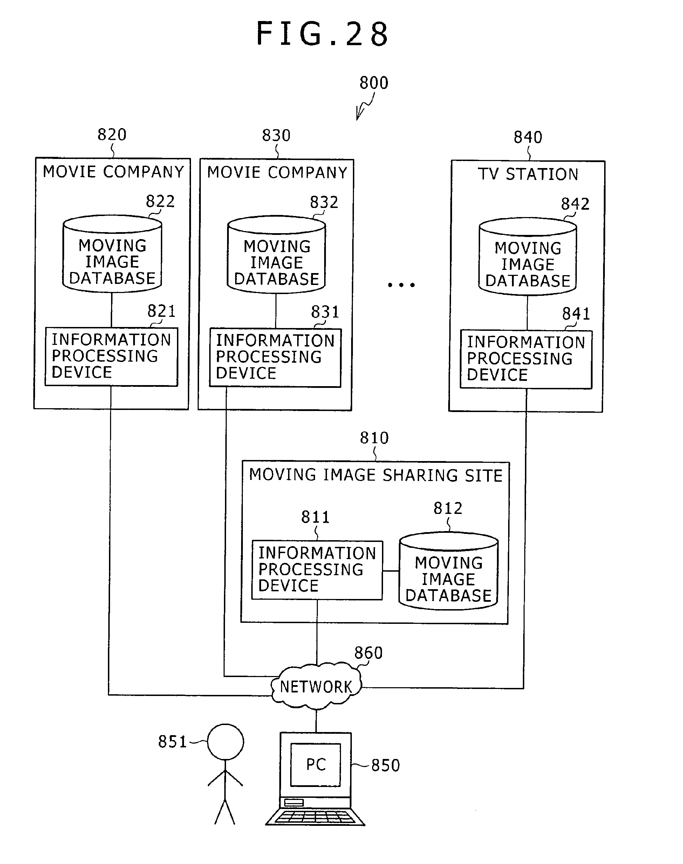

FIG. 28 is a system configuration diagram showing an information processing system 800 according to one embodiment of the present invention. In the information processing system 800, information processing devices in one or plural content-provider companies (movie companies, TV stations, and so on) and user terminals (personal computers, televisions, and so on) for viewing and providing of content are connected to a moving image sharing site. In this example, movie companies 820 and 830 and a TV station 840 are the content-provider companies, and a personal computer (PC) 850 is the user terminal. Information processing devices 821, 831, and 841 provided in the movie companies 820 and 830 and the TV station 840 and the PC 850 are connected to an information processing device 811 in a moving image sharing site 810. The information processing devices 811, 821, 831, and 841 and the PC 850 are connected to each other via a network 860 as a communication network such as the Internet, and can exchange various kinds of information.

The information processing devices 811, 821, 831, and 841 each have the same configuration as that of any of the information processing devices according to an embodiment of the present invention, and are provided with moving image databases 812, 822, 832, and 842, respectively, for management of moving images. The information processing devices 821, 831, and 841 and the PC 850 can upload a moving image to the moving image sharing site 810 under a certain condition. As the condition for the uploading of a moving image, any of various conditions can be set, such as a condition that the length of the moving image is shorter than five minutes and a condition that the moving image has a low resolution. A user 851 of the PC 850 can freely view, by using the PC 850, comparatively-short moving images and moving images of a low resolution uploaded to the moving image sharing site 810. If the user wants to view the full-length or high-quality version of a moving image uploaded to the moving image sharing site 810, the user can purchase the full-length or high-quality version of the moving image from the content-provider company that uploaded the moving image, and can view the purchased moving image.

The method for moving image retrieval in the information processing system 800 will be described below. Initially, the user 851 of the PC 850 views, by using the PC 850, comparatively-short moving images and moving images of a low resolution uploaded to the moving image sharing site 810. If the user 851 wants to view the full-length or high-quality version of an uploaded moving image, the user 851 sends a retrieval instruction to the moving image sharing site 810 by using the PC 850.

Upon receiving the retrieval instruction from the PC 850, the information processing device 811 creates a feature list by extracting the change point intervals of the moving image relating to this retrieval instruction, and sends this feature list to the information processing devices 821, 831, and 841. Upon receiving this feature list, the information processing devices 821, 831, and 841 each check the change point intervals included in the received feature list against change point intervals stored in the built-in database, for the retrieval of the matching moving image. Subsequently, the information processing devices 821, 831, and 841 transmit the retrieval results to information processing device 811. Upon receiving the retrieval results, the information processing device 811 sums up the received retrieval results and transmits the summed retrieval result to the PC 850. After receiving and viewing the retrieval result, the user 851 accesses by using the PC 850 the content-provider company having the full-length or high-quality version of the desired moving image, and can decide whether to purchase the moving image. In this example, the moving image retrieval is carried out in the content-provider companies. Alternatively, the information processing device 811 may hold the feature lists corresponding to uploaded moving images so that the moving image retrieval may be carried out in the moving image sharing site 810.

In the information processing system 800, as described above, the user 851 can upload comparatively-short moving images and low-resolution moving images to the moving image sharing site 810 by using the PC 850. Furthermore, another user can freely view by a user terminal or the like the moving images uploaded to the moving image sharing site 810 by the user 851. However, it will also be possible that the moving images uploaded to the moving image sharing site 810 by the user 851 relate to other people's copyrights. If a moving image relating to other people's copyrights is thus uploaded to the moving image sharing site 810, it is important for the moving image sharing site to appropriately carry out filtering in order to prevent copyright violation.

For this purpose, for example, an NG tag that is associated with a moving image and indicates whether or not the moving image relates to copyrights is stored in the database of the information processing device 811 storing the feature lists, on a content-by-content basis. Based on this NG tag, whether or not an uploaded moving image relates to copyrights is determined, so that the filtering can be carried out.

It will also be possible that a moving image whose audio is processed is uploaded to the moving image sharing site. However, a feature relating to audio is not used in the retrieval of the matching moving image according to one embodiment of the present invention. Therefore, appropriate moving image retrieval can be carried out also for a moving image having no audio and a moving image having edited audio. In addition, an edited moving image will also be uploaded to the moving image sharing site. However, in the retrieval of the matching moving image according to one embodiment of the present invention, a determination as to the matching moving image can be made as long as a matching cut-change point interval is found in one part of the moving image. Therefore, even when the retrieval-subject moving image is one part of a certain moving image, appropriate retrieval can be carried out. Similarly, even when the retrieval-subject moving image arises from joining of plural moving images, appropriate retrieval can be carried out. Due to these characteristics, filtering of moving images that possibly violate copyrights can be carried out appropriately and rapidly.

Also for a moving image other than ones relating to copyrights, the NG tag can be used for a determination as to whether to permit the release of the moving image.

Furthermore, embodiments of the present invention can be applied to e.g. the case of eliminating video similar to moving image content, and the case of eliminating moving image content that does not need to be stored by detecting or submitting the same moving image and a similar moving image for the manager of the moving image sharing site.

As described above, in the retrieval of the matching moving image according to an embodiment of the present invention, appropriate moving image retrieval can be carried out also for a moving image having no audio, a moving image having edited audio, an edited moving image, and so on. Furthermore, the retrieval of the matching moving image can be carried out by using only a cut-change point interval as a feature, and thus the database amount for the retrieval of the matching moving image can be saved. Moreover, the retrieval of the matching moving image is carried out by using a change point interval, and therefore appropriate retrieval can be carried out also for moving images having different bit rates or image sizes. That is, embodiments of the present invention allow reduction in the amount of information that should be held for moving image retrieval and permits appropriate moving image retrieval to be carried out rapidly.

The above-described embodiment of the present invention relates to matching retrieval for a moving image input to an information processing device. However, embodiments of the present invention can be applied also to e.g. the following purposes: retrieval of moving image content distributed on the Internet; matching retrieval in a content holder (movie company, TV station, CM content holder); a system in which a user captures a TV program or the like by a cellular phone and sends it to a server to thereby introduce or distribute the same content; classification of moving image content; and classification of moving image content in a moving image sharing site.

The above-described embodiment of the present invention relates to an information processing device as an example. However, an embodiment of the present invention can be applied also to an image retrieval device that can retrieve a moving image, such as a portable terminal device.

Furthermore, the above-described embodiment of the present invention relates to an information processing device that includes a feature extractor, a feature checker, and a database. However, an embodiment of the present invention can be applied also to an information processing system that includes a feature extraction server for extracting a feature from moving image content, a feature database for storing the feature extracted from the moving image content, and a feature check server for checking a feature of an input moving image against a feature in the feature database to thereby carry out retrieval matching for the input moving image based on the check result.

The processing procedure described above for the embodiment of the present invention may be interpreted as a method including the procedure.

The present invention contains subject matter related to Japanese Patent Application JP 2007-213219 filed in the Japan Patent Office on August 20, 2007, the entire contents of which being incorporated herein by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing device comprising:
storing means for storing at least one change point interval of video data on a data-by-data basis;
calculating means for calculating at least one change point interval from input video data;
detecting means for detecting change point intervals that match each other, one of the detected change point intervals arising from storage in the storing means, the other of the detected change point intervals arising from calculation by the calculating means; and
determining means for comparing change point intervals with each other that are each included in a predetermined range from a respective one of the change point intervals detected by the detecting means, to determine whether or not the input video data matches video data corresponding to a change point interval stored in the storing means.

2. The information processing device according to claim 1, further comprising
determination criterion setting means for setting a determination criterion, the determination criterion being whether or not matching is found regarding a change point interval adjacent to the change point interval detected by the detecting means or a value arising from addition of consecutive change point intervals that are included in a predetermined range from the adjacent change point interval, wherein
the determining means determines whether or not the input video data matches the video data corresponding to the change point interval stored in the storing means, in accordance with the determination criterion set by the determination criterion setting means.

3. The information processing device according to claim 2, further comprising
basis point setting means for setting basis change point intervals if matching is found regarding the adjacent change point interval or the value arising from the addition, the basis change point intervals being each the most distant from a respective one of the change point intervals detected by the detecting means among change point intervals used as comparison subjects, wherein
the determining means determines whether or not the input video data matches the video data corresponding to the change point interval stored in the storing means in accordance with a next determination criterion, the next determination criterion being whether or not matching is found regarding a change point interval adjacent to the basis change point interval set by the basis point setting means or a value arising from addition of consecutive change point intervals that are included in a predetermined range from the change point interval adjacent to the basis change point interval.

4. The information processing device according to claim 2, wherein
the storing means stores a value arising from addition of, among the at least one change point interval, consecutive change point intervals that are each equal to or shorter than a predetermined value, and
the determination criterion setting means sets a new determination criterion if the at least one change point interval includes consecutive change point intervals that are each shorter than the predetermined value, the new determination criterion being whether or not matching is found regarding a value arising from addition of the consecutive change point intervals that are each equal to or shorter than the predetermined value.

5. The information processing device according to claim 2, the storing means storing a feature that is extracted from video data and is associated with the at least one change point interval in a time-series manner, the information processing device further comprising:
feature comparing means for comparing the feature stored in the storing means and a feature extracted from the input video data, for video data determined to match each other by the determining means;
threshold calculating means for calculating a threshold used in detection of change point intervals by the detecting means, in accordance with a comparison result by the feature comparing means; and
threshold updating means for updating a set threshold to the threshold calculated by the threshold calculating means.

6. The information processing device according to claim 1, further comprising
deleting means for deleting the video data corresponding to the change point interval stored in the storing means if the determining means determines that the input video data matches the video data corresponding to the change point interval stored in the storing means.

7. The information processing device according to claim 1, further comprising
display controlling means for causing a display unit to display the video data corresponding to the change point interval stored in the storing means if the determining means determines that the input video data matches the video data corresponding to the change point interval stored in the storing means.

8. The information processing device according to claim 7, wherein
the display controlling means causes the display unit to display the input video data.

9. An information processing method comprising the steps of:
storing at least one change point interval of video data on a data-by-data basis;
calculating at least one change point interval from input video data;
detecting change point intervals that match each other, one of the detected change point intervals arising from the storing, the other of the detected change point intervals arising from the calculating; and
comparing change point intervals with each other that are each included in a predetermined range from a respective one of the change point intervals detected in the detecting, to determine whether or not the input video data matches video data corresponding to a change point interval stored in the storing means.

10. An information processing device comprising:
a memory configured to store at least one change point interval of video data on a data-by-data basis;
a calculator configured to calculate at least one change point interval from input video data;
a detector configured to detect change point intervals that match each other, one of the detected change point intervals arising from storage in the memory, the other of the detected change point intervals arising from calculation by the calculator; and
a determiner configured to compare change point intervals with each other that are each included in a predetermined range from a respective one of the change point intervals detected by the detector, to determine whether or not the input video data matches video data corresponding to a change point interval stored in the memory.
